(19) Europäisches Patentamt
European Patent Office
Office européen des brevets

(11) EP 2 225 299 B1

(12) EUROPÄISCHE PATENTSCHRIFT

(45) Veröffentlichungstag und Bekanntmachung des Hinweises auf die Patenterteilung:
**30.03.2016 Patentblatt 2016/13**

(21) Anmeldenummer: **08862756.7**

(22) Anmeldetag: **18.12.2008**

(51) Int Cl.:
***C08G 18/18*** (2006.01) ***C08G 18/28*** (2006.01)
***C08G 18/62*** (2006.01) ***C08G 18/73*** (2006.01)
***C08G 18/77*** (2006.01) ***C08G 18/79*** (2006.01)
***C09D 175/04*** (2006.01) ***C08K 3/32*** (2006.01)

(86) Internationale Anmeldenummer:
**PCT/EP2008/010808**

(87) Internationale Veröffentlichungsnummer:
**WO 2009/077180 (25.06.2009 Gazette 2009/26)**

(54) **BESCHICHTUNGSMITTEL MIT HOHER KRATZBESTÄNDIGKEIT UND WITTERUNGSSTABILITÄT**

COATING AGENT WITH HIGH SCRATCH RESISTANCE AND WEATHERING RESISTANCE

PRODUIT DE REVÊTEMENT AYANT UNE RÉSISTANCE ÉLEVÉE AUX RAYURES ET UNE GRANDE STABILITÉ AUX INTEMPÉRIES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **19.12.2007 DE 102007061854**

(43) Veröffentlichungstag der Anmeldung:
**08.09.2010 Patentblatt 2010/36**

(73) Patentinhaber: **BASF Coatings GmbH**
**48165 Münster (DE)**

(72) Erfinder:
- **GROENEWOLT, Matthijs**
  **48147 Münster (DE)**
- **FRERICK, Sebastian**
  **48147 Münster (DE)**

(74) Vertreter: **Steffan, Gerhard**
**Leifert & Steffan**
**Patentanwälte**
**Postfach 10 40 09**
**40031 Düsseldorf (DE)**

(56) Entgegenhaltungen:
**EP-A1- 0 554 684** **WO-A-00/55229**
**WO-A-2008/074489** **WO-A-2008/110230**
**DE-A1-102005 045 228** **US-A- 5 747 590**

- **DATABASE WPI Week 199927, Derwent Publications Ltd., London, GB; AN 1999-323739 -& JP H11 116 847 A (KANEKA CORP) 27 April 1999**
- **Panayiotis A. Koutentis ET AL: "Synthesis of [(4-Chloro-5H-1,2,3-dithiazol-5-ylidene)amino]azines", Molecules, vol. 16, no. 12, 25 October 2011 (2011-10-25), pages 8992-9002, XP055213623, DOI: 10.3390/molecules16118992**

Bemerkungen:
Die Akte enthält technische Angaben, die nach dem Eingang der Anmeldung eingereicht wurden und die nicht in dieser Patentschrift enthalten sind.

EP 2 225 299 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft Beschichtungsmittel enthaltend

(a) mindestens eine hydroxylgruppenhaltige Verbindung (A),
(b) mindestens eine Verbindung (B) mit freien und/oder blockierten Isocyanatgruppen, und
(c) mindestens einen Katalysator (C) für die Vernetzung von Silangruppen,

wobei ein oder mehrere Bestandteile (A) und/oder (B) und/oder mindestens ein weiterer Bestandteil des Beschichtungsmittels hydrolysierbare Silangruppen enthalten.

In der WO-A-01/98393 werden 2K-Beschichtungsmittel beschrieben, welche ein Polyol als Bindemittelkomponente sowie als Vernetzerkomponente ein Polyisocyanat, welches teilweise mit Alkoxysilylgruppen funktionalisiert ist, enthalten. Diese Beschichtungsmittel werden als Primer eingesetzt und auf die Haftung mit metallischen Untergründen, insbesondere Aluminium-Untergründe, optimiert. Auf diese Beschichtungsmittel können im Rahmen einer OEM-Serienlackierung oder einer Reparaturlackierung Basislack-Klarlack-Aufbauten aufgebracht werden. Hinsichtlich der Kratzfestigkeit und der Witterungsstabilität sind die Beschichtungsmittel gemäß WO 01/98393 nicht optimiert.

In EP-A-0 994 117 werden feuchtehärtbare Mischungen beschrieben, welche eine Polyolkomponente und eine Polyisocyanat-Komponente, die teilweise mit einem bevorzugt zu einem Aspartat umgesetzten Monoalkoxysilylalkylamin umgesetzt sein kann, enthalten. Beschichtungen aus solchen Mischungen weisen zwar eine gewisse Härte auf, sind jedoch hinsichtlich Witterungsstabilität und insbesondere hinsichtlich ihrer Kratzfestigkeit für OEM-Anwendungen nur bedingt geeignet.

US-A-2006/0217472 beschreibt Beschichtungsmittel, welche ein hydroxyfunktionelles Acrylat, eine niedermolekulare Polyol-Komponente, ein Polyisocyanat sowie eine aminofunktionelle Alkoxysilylkomponente, bevorzugt Bisalkoxysilylamin, enthalten können. Solche Beschichtungsmittel werden als Klarlack in Basislack-Klarlack-Aufbauten eingesetzt und führen zu kratzfesten Beschichtungen. Solche Beschichtungsmittel sind allerdings nur sehr bedingt lagerfähig und die resultierenden Beschichtungen weisen eine geringe Witterungsstabilität, insbesondere gegen UV-Strahlung im Feucht-Trocken-Zyklus, auf.

In WO 2006/042585 werden Klarlacke, die für die OEM-Serienlackierung geeignet sind, beschrieben, welche als Hauptbindemittelkomponente Polyisocyanate, deren Isocyanatgruppen vorzugsweise zu mehr als 90 mol-% mit Bisalkoxysilylaminen umgesetzt sind, enthalten. Solche Klarlacke weisen eine ausgezeichnete Kratzbeständigkeit bei gleichzeitig hoher Chemikalien- und Witterungsbeständigkeit auf. Allerdings besteht noch Bedarf nach weiterer Verbesserung der Witterungsstabilität, insbesondere gegen Rissbildung bei UV-Bestrahlung im Feucht-Trockenzyklus, bei Erhalt des hohen Niveaus der Kratzfestigkeit.

EP-A-1 273 640 beschreibt 2K-Beschichtungsmittel, bestehend aus einer Polyol-Komponente und einer Vernetzerkomponente, bestehend aus aliphatischen und/oder cycloaliphatischen Polyisocyanaten, wobei 0,1 bis 95 mol% der ursprünglich freien vorhandenen Isocyanatgruppen mit Bisalkoxylsilylamin umgesetzt ist. Diese Beschichtungsmittel können für die OEM-Serienlackierung eingesetzt werden und weisen nach ihrer vollständigen Härtung eine gute Kratzbeständigkeit bei gleichzeitig guter Beständigkeit gegen Umwelteinflüsse auf. Jedoch neigen diese Beschichtungsmittel besonders stark zur Nachvernetzung, was eine - direkt nach der thermischen Endhärtung - nur unzureichende Kratzfestigkeit der Beschichtungen zur Folge hat. Ebenso wirkt sich die starke Nachvernetzung negativ auf die Witterungsstabilität aus, da eine erhöhte Gefahr von Spannungsrissen besteht.

EP-0 554 684 beschreibt eine härtbare Lackzusammensetzung enthaltend (A) ein Vinylpolymer mit mindestens einen Siliciumatom, an das eine hydrolysierbare Gruppe gebunden ist, an ein Ende der Hauptkette und/oder in einer Seitenkette, wobei die Hauptkette eine Vinylmonomereinheiten umfaßt, (B) mindestens eine Carbonatgruppe enthaltende Verbindung ausgewählt aus (i) einer Verbindung, die eine hydrolysierbare Silylgruppe enthält und wenigstes eine Carbonatgruppe und wenigstes ein an eine hydrolysierbare Gruppe gebundenes Siliciumatom im Molekül enthält, (ii) einer Polycarbonatpolyolverbindung mit wenigstens einer Carbonatgruppe und wenigstens zwei Hydroxylgruppen im Molekül enthält und (C) einen Härtungkatalysator.

Bei der Erstlackierung von Automobilen können relativ hohe Härtungstemperaturen angewendet werden, da die Automobilkarosserie noch keine temperaturempfindlichen Teile enthält. Eine andere Situation ergibt sich bei der Reparaturlackierung. Wenn beispielsweise Fehlstellen im fertig lackierten Auto eine **partielle Ausbesserung in der Serienfertigung erfordern oder wenn bei späteren kleinen Bagatellschäden nur ein Teil der Oberfläche erneut lackiert werden soll, ist es notwendig, Lacke einzusetzen, die bei niedrigen Temperaturen aushärten, um** temperatursensitive Teile wie Reifen und Kunststoffteile nicht zu gefährden. Silanisierte Systeme sind in der Lage, bei relativ geringen Temperaturen gehärtet zu werden, jedoch ist die Isocyanatvernetzung generell nur bei erhöhten Temperaturen ausreichend.

Bei teilsilanisierten Systemen, die zusätzlich unter Urethanbildung durch Polyisocyanate vernetzt werden, werden oft blockierte Phosphorsäureesterderivate als Katalysatoren eingesetzt. Hierbei wird die saure Wirkung des Phosphorsäureesters durch eine basische Komponente neutralisiert. Zur Blockierung werden in der Regel Amine, wie zum Beispiel Triethylamin, eingesetzt. Ab einer bestimmten Temperatur wird die Blockierung aufgehoben, die Phosphorverbindungen bewirken eine saure Hydrolyse der Alkoxysilanverbindungen und das Triethylamin verlässt aufgrund seines geringen Dampfdrucks den Lack. Eine saure Katalyse der Isocyanat-Polyol-Reaktion wird im allgemeinen hierbei nicht erzielt.

## Aufgabe

Aufgabe der vorliegenden Erfindung war es, Beschichtungsmittel, insbesondere für die Klarlackschicht bei OEM-Serienlackierungen und bei Automobilreparaturlackierungen, zur Verfügung zu stellen, die zu einem hochgradig witterungsstabilen Netzwerk führen, wobei die unerwünschte Ausbildung von hydrolyse- und witterungslabilen Gruppierungen weitestgehend unterdrückt wird, um eine hohe Säurefestigkeit zu gewährleisten. Daneben sollen die Beschichtungsmittel zu Beschichtungen führen, welche schon direkt nach der thermischen Härtung hochgradig kratzfest sind und insbesondere einen hohen Glanzerhalt nach Kratzbelastung aufweisen. Weiterhin sollten sich die Beschichtungen und Lackierungen, speziell die Klarlackierungen, auch in Schichtdicken > 40 μm herstellen lassen, ohne dass Spannungsrisse auftreten. Dies ist eine wesentliche Voraussetzung für die Verwendung der Beschichtungen und Lackierungen, insbesondere der Klarlackierungen, in dem technologisch und ästhetisch besonders anspruchsvollen Gebiet der Automobilserienlackierung (OEM).

Insbesondere sollten Klarlackierungen mit hoher Beständigkeit, besonders gegen Rissbildung, bei Bewitterung mit UV-Strahlung im Feucht-Trockenzyklus in Kombination mit ausgezeichneter Kratzfestigkeit zur Verfügung gestellt werden. Darüber hinaus sollen die neuen Beschichtungsmittel einfach und sehr gut reproduzierbar herstellbar sein und während der Lackapplikation keine ökologischen Probleme bereiten.

Eine wesentliche Aufgabe der vorliegenden Erfindung ist es, bei Lacken, die durch eine Hydrolyse von Alkoxysilanverbindungen und zusätzlich durch die Reaktion von Isocyanatgruppen mit Hydroxylgruppen ausgehärtet werden, eine vollständige Vernetzung bei niedrigen Temperaturen zu erzielen. Überraschenderweise wurde gefunden, dass diese Aufgabe durch den Einsatz von bicyclischen Aminen zur Blockierung von Phosphorsäurekatalysatoren gelöst werden kann.

## Lösung der Aufgabe

Gegenstand der vorliegenden Erfindung sind daher Beschichtungsmittel der eingangs genannten Art, bei denen das Vernetzungsmittel (B) mit den reaktiven Gruppen des Bindemittels (A) unter Vernetzung reagieren kann und der Katalysator (C) ein mit einem bicyclischen Amin mit einem $pK_b$- Wert ≥ 3 und einem Siedepunkt > 100°C blockierte Phosphorsäureverbindung, insbesondere Phosphorsäure oder Phosphonsäure ist.

Weitere vorteilhafte Ausgestaltungen der Erfindung der Erfindung ergeben sich aus den Unteransprüchen. Die Vernetzung des erfindungsgemäßen Beschichtungsmittels erfolgt simultan über die Reaktion der Isocyanatgruppen und der hydrolysierbaren Silangruppen. Die Silangruppen können Bestandteil der Verbindung (A) und/oder (B) sein. Es ist aber auch möglich, dass das Beschichtungsmittel eine weitere Komponente enthält, die Träger der Silangruppen ist. Die Bestimmung des $pK_b$-Wertes ist im Anhang beschrieben.

Die erfindungsgemäß zuzusetzenden bicyclischen Amine haben einen höheren Siedepunkt als beispielsweise Triethylamin. Hierdurch verbleiben sie nach der Deblockierung in der Lackschicht und katalysieren zusätzlich die Isocyanat-Alkohol-Reaktion. Ein geeignetes hochsiedendes tertiäres Amin ist z. B. das Diazabicyclooctan (DABCO). Die katalytische Wirkung solcher tertiärer Amine auf der Reaktion der Isocyanatgruppen mit Hydroxylgruppen ist an sich bekannt. Es war jedoch aufgrund des salzartigen Charakters der Phosphorsäureester-Amin-Komplexe überraschend und nicht vorhersehbar, dass die Isocyanat-Vernetzung mit Polyolen selbst bei niedrigen Temperaturen, wie z. B. 60°C, in gleicher Weise katalysiert wird wie durch freies Diazabicyclooctan.

Im Hinblick auf den Stand der Technik war es überraschend und für den Fachmann nicht vorhersehbar, dass die Aufgaben, die der vorliegenden Erfindung zugrunde lagen, mit Hilfe des erfindungsgemäßen Beschichtungsmittels gelöst werden konnten.

Die erfindungsgemäßen Komponenten können besonders einfach und sehr gut reproduzierbar hergestellt werden und bereiten bei der Lackapplikation keine signifikanten toxikologischen und ökologischen Probleme.

Die erfindungsgemäßen Beschichtungsmittel liefern neue Beschichtungen und Lackierungen, speziell Klarlackierungen, die hoch kratzfest sind und im Gegensatz zu gängigen hochvernetzten kratzfesten Systemen säureresistent sind. Weiterhin lassen sich die erfindungsgemäßen Beschichtungen und Lackierungen, speziell die Klarlackierungen, auch in Schichtdicken > 40 μm herstellen, ohne dass Spannungsrisse auftreten. Deswegen können die erfindungsgemäßen Beschichtungen und Lackierungen, insbesondere die Klarlackierungen, in dem technologisch und ästhetisch besonders anspruchsvollen Gebiet der Automobilserienlackierung (OEM) eingesetzt werden. Dabei zeichnen sie sich durch eine besonders hohe Waschstraßenbeständigkeit und Kratzfestigkeit aus. Insbesondere ist die hohe Kratzfestigkeit

der Beschichtungen direkt nach der Endhärtung der Beschichtungen gegeben, so dass die Beschichtungen direkt im Anschluß an die Endhärtung problemlos gehandhabt werden können. Außerdem ist die Beständigkeit der erfindungsgemäßen Beschichtungen gegen Rissbildung bei UV-Strahlung und Feucht-Trockenwechsel im CAM180-Test (nach DIN EN ISO 11341 Feb 98 und DIN EN ISO 4892-2 Nov 00) in Kombination mit einer hohen Kratzfestigkeit ausgezeichnet.
Insbesondere werden die erfindungsgemäßen Beschichtungsmittel und Lackierungen, insbesondere die Klarlackierungen, in dem technologisch und ästhetisch besonders anspruchsvollen Gebiet der Automobilserienlackierung (OEM), vor allem zur Beschichtung von Kunststoff-Anbauteilen für Pkw-Karosserien, insbesondere für Karosserien von Pkw der Oberklasse, wie z. B. für die Herstellung von Dächern, Heckklappen, Motorhauben, Kotflügeln, Stoßstangen, Spoilern, Schwellern, Schutzleisten, seitlichen Verkleidungen sowie der Automobilreparaturlackierung eingesetzt.
Die Kunststoffteile bestehen üblicherweise aus ASA, Polycarbonaten, Blends aus ASA und Polycarbonaten, Polypropylen, Polymethylmethacrylaten oder schlagzäh modifizierte Polymethylmethacrylaten, insbesondere aus Blends aus ASA und Polycarbonaten, bevorzugt mit einem Polycarbonatanteil > 40%, insbesondere > 50%, verwendet.
Unter ASA werden dabei im Allgemeinen schlagzähmodifizierte Styrol/Acrylnitril-Polymerisate verstanden, bei denen Pfropfcopolymerisate von vinylaromatischen Verbindungen, insbesondere Styrol, und von Vinylcyaniden, insbesondere Acrylnitril, auf Polyalkylacrylatkautschuken in einer Copolymermatrix aus insbesondere Styrol und Acrylnitril, vorliegen.

### Beschreibung der Erfindung

Beispiele für geeignete phosphorhaltige Katalysatoren (C) sind substituierte Phosphonsäurediester und Diphosphonsäurediester, vorzugsweise aus der Gruppe, bestehend aus acyclischen Phosphonsäurediestern, cyclischen Phosphonsäurediestern, acyclischen Diphosphonsäurediestern und cyclischen Diphosphonsäurediestern. Derartige Katalysatoren sind beispielsweise in der deutschen Patentanmeldung DE-A-102005045228 beschrieben.

Insbesondere werden aber als Katalysator substituierte Phosphorsäuremonoester und Phosphorsäurediester, vorzugsweise aus der Gruppe, bestehend aus acyclischen Phosphorsäurediestern und cyclischen Phosphorsäurediestern, besonders bevorzugt Aminaddukte der Phosphorsäure-mono- und -di-ester, eingesetzt.
Dabei werden die acyclischen Phosphorsäurediester (C) insbesondere aus der Gruppe, bestehend aus acyclischen Phosphorsäurediestern (C) der allgemeinen Formel (IV):

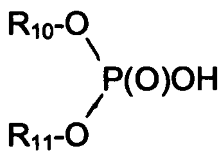 (IV);

ausgewählt, wobei die Reste $R_{10}$ und $R_{11}$ aus der Gruppe, bestehend aus:

- substituiertem und unsubstituiertem Alkyl- mit 1 bis 20, vorzugsweise 2 bis 16 und insbesondere 2 bis 10 Kohlenstoffatomen, Cycloalkyl- mit 3 bis 20, vorzugsweise 3 bis 16 und insbesondere 3 bis 10 Kohlenstoffatomen und Aryl- mit 5 bis 20, vorzugsweise 6 bis 14 und insbesondere 6 bis 10 Kohlenstoffatomen,
- substituiertem und unsubstituiertem Alkylaryl-, Arylalkyl-, Alkylcycloalkyl-, Cycloalkylalkyl-, Arylcycloalkyl-, Cycloalkylaryl-, Alkylcycloalkylaryl-, Alkylarylcycloalkyl-, Arylcycloalkylalkyl-, Arylalkylcycloalkyl-, Cycloalkylalkylaryl-und Cycloalkylarylalkyl-, wobei die hierin enthalten Alkyl-, Cycloalkyl- und Arylgruppen jeweils die vorstehend aufgeführte Anzahl von Kohlenstoffatomen enthalten und
- substituiertem und unsubstituiertem Rest- der vorstehend aufgeführten Art, enthaltend mindestens ein, insbesondere ein, Heteroatom, ausgewählt aus der Gruppe bestehend aus Sauerstoffatom, Schwefelatom, Stickstoffatom, Phosphoratom und Siliziumatom, insbesondere Sauerstoffatom, Schwefelatom und Stickstoffatom ausgewählt werden und zusätzlich auch Wasserstoff darstellen können (Teilveresterung)

Die Katalysatoren werden vorzugsweise in Anteilen von 0,01 bis 20 Gew.-%, besonders bevorzugt in Anteilen von 0,1 bis 10 Gew.-%, bezogen auf die nicht flüchtigen Bestandteile des erfindungsgemäßen Beschichtungsmittels, eingesetzt. Dabei hat auch die eingesetzte Menge des Katalysators einen gewissen Einfluß auf die Vernetzung, da eine geringere Wirksamkeit des Katalysators durch entsprechend höhere Einsatzmengen teilweise kompensiert werden kann.

### Die Struktureinheiten mit hydrolysierbaren Silangruppen

Es ist erfindungswesentlich, dass ein oder mehrere Bestandteile des Beschichtungsmittels hydrolysierbare

Silangruppen enthalten. Insbesondere kommen hier Beschichtungsmittel in Betracht, bei denen ein oder mehrere Bestandteile des Beschichtungsmittels zumindestens teilweise eine oder mehrere, gleiche oder verschiedene Struktureinheiten der Formel (I) aufweisen

$$-X\text{-}Si\text{-}R''_xG_{3-x} \qquad (I)$$

mit

G = identische oder unterschiedliche hydrolysierbare Gruppen,

X = organischer Rest, insbesondere linearer und/oder verzweigter Alkylen- oder Cycloalkylenrest mit 1 bis 20 Kohlenstoffatomen, ganz besonders bevorzugt X = Alkylenrest mit 1 bis 4 Kohlenstoffatomen,

R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,

x = 0 bis 2, bevorzugt 0 bis 1, besonders bevorzugt x = 0.

Dabei hat auch die Struktur dieser Silanreste einen Einfluß auf die Reaktivität und damit auch auf die möglichst weitgehende Umsetzung während des Härtens der Beschichtung, also auf die Einstellung eines möglichst niedrigen Nachvernetzungsindexes (PCI).

Hinsichtlich der Verträglichkeit und der Reaktivität der Silane werden Silane mit 3 hydrolysierbaren Gruppen bevorzugt eingesetzt, d.h. x = 0.

Die hydrolysierbaren Gruppen G können ausgewählt werden aus der Gruppe der Halogene, insbesondere Chlor und Brom, aus der Gruppe der Alkoxygruppen, aus der Gruppe der Alkylcarbonylgruppen und aus der Gruppe der Acyloxygruppen. Besonders bevorzugt sind Alkoxygruppen (OR').

Die jeweiligen bevorzugten Alkoxyreste (OR') können gleich oder verschieden sein, entscheidend für den Aufbau der Reste ist jedoch, inwiefern diese die Reaktivität der hydrolysierbaren Silangruppen beeinflussen. Bevorzugt ist R' ein Alkylrest, insbesondere mit 1 bis 6 C-Atomen. Besonders bevorzugt sind Reste R', die die Reaktivität der Silangruppen erhöhen, d.h. gute Abgangsgruppen darstellen. Insofern ist ein Methoxy - Rest gegenüber einem Ethoxy - Rest und dieser wiederum gegenüber einem Propoxyrest bevorzugt. Besonders bevorzugt ist daher R' = Ethyl und/oder Methyl, insbesondere Methyl.

Des Weiteren kann die Reaktivität von organofunktionellen Silanen auch durch die Länge der Spacer X zwischen Silan - Funktionalität und organischer funktioneller Gruppe, die zur Reaktion mit dem modifizierenden Bestandteil dient, erheblich beeinflusst werden. Beispielhaft dafür seien die "alpha" - Silane genannt, die bei der Firma Wacker erhältlich sind, und bei denen eine Methylengruppe anstelle der bei "gamma"-Silane vorhandenen Propylengruppe zwischen Si-Atom und funktioneller Gruppe ist. Zur Verdeutlichung wird angeführt, dass Methacryloxymethyltrimethoxysilan ("alpha" - Silan, z.B. Handelsprodukt GENIOSIL® XL 33 der Firma Wacker) bevorzugt gegenüber Methacryloxypropyltrimethoxysilan ("gamma" - Silan, z.B. Handelsprodukt GENIOSIL® GF 31 der Firma Wacker) eingesetzt wird, um die hydrolysierbaren Silangruppen in das Beschichtungsmittel einzuführen.

Ganz allgemein sind Spacer, die die Reaktivität der Silane erhöhen, bevorzugt gegenüber Spacern, die die Reaktivität der Silane herabsetzen.

Daneben hat auch die Funktionalität der Silane einen Einfluß auf den Nachvernetzungsindex. Unter Funktionalität wird dabei die Anzahl der Reste der Formel (I) pro Molekül verstanden. Unter einem monofunktionellen Silan werden daher Silane verstanden, die pro Silan-Molekül jeweils einen Rest der Formel (I) in den zu modifizierenden Bestandteil einführen. Unter einem difunktionellen Silan werden dabei Silane verstanden, die pro Silan-Molekül jeweils zwei Reste der Formel (I) in den Bestandteil einführen.

Besonders bevorzugt sind erfindungsgemäß Beschichtungsmittel, bei denen die Bestandteile mit einer Mischung aus einem mono- und einem di-funktionellen Silan modifiziert worden sind. Als difunktionelle Silane werden dabei insbesondere die weiter unten beschriebenen aminofunktionellen Disilane der Formel (IIa) und als monofunktionelle Silane die weiter unten beschriebenen Silane der Formel (IIIa) eingesetzt.

Schließlich können auch nicht funktionelle Substituenten am organofunktionellen Silan, das zur Einführung der Struktureinheiten (I) bzw. (II) bzw. (III) eingesetzt wird, die Reaktivität der hydrolysierbaren Silangruppe beeinflussen. Beispielhaft sei dies erläutert am Beispiel von voluminösen, sperrigen Substituenten an der Aminfunktion, die die Reaktivität von Aminfunktionellen Silanen reduzieren können. Vor diesem Hintergrund ist N-(n-butyl)-3-aminopropyltrimethoxysilan bevorzugt vor N-Cyclohexyl-3-aminopropyltrimethoxysilan zur Einführung der Struktureinheiten (III).

Ganz allgemein sind die Reste, die die Reaktivität der Silane erhöhen, bevorzugt gegenüber Resten, die die

Reaktivität der Silane herabsetzen.

Die Struktureinheiten der Formel (I) können auf unterschiedliche Arten in die Bestandteile des Beschichtungsmittels eingeführt werden. Gemeinsam ist den verschiedenen Arten jedoch, dass die Einführung der Struktureinheiten über eine Reaktion der funktionellen Gruppen der zu modifizierenden Bestandteile mit komplementären funktionellen Gruppen des Silans erfolgt. Beispielhaft seien daher im Folgenden verschiedenen Möglichkeiten zur Einführung der Struktureinheiten (I) in die Hydroxyl- und ggf. noch weitere reaktive Gruppen aufweisende Verbindung (A) und/oder in die Isocyanatgruppen aufweisende Verbindung (B) aufgeführt.

Zum Einsatz, insbesondere im Rahmen von Michael - Additionen, kommen beispielsweise primäre Aminosilane, wie 3 - Aminopropyltriethoxysilan (erhältlich z.B. unter dem Markennamen Geniosil® GF 93 von der Fa. Wacker Chemie), 3 - Aminopropyltrimethoxysilan (erhältlich z.B. unter dem Markennamen Geniosil® GF 96 von der Fa. Wacker Chemie), N-(2-Aminoethyl)-3-aminopropyltrimethoxysilan (erhältlich z.B. unter dem Markennamen Geniosil® GF 9 sowie Geniosil® GF 91 von der Fa. Wacker Chemie), N-(2-Aminoethyl)-3-aminopropylmethyldimethoxysilan (erhältlich z.B. unter dem Markennamen Geniosil® GF 95 von der Fa. Wacker Chemie)

Zum Einsatz, insbesondere im Rahmen von Additionen an Isocyanat - funktionelle Verbindungen, kommen beispielsweise sekundäre Aminosilane, wie beispielsweise Bis-(2-trimethoxysilylethyl)amin, Bis-(2-triethoxysilylethyl)amin, Bis (3-triethoxysilylpropyl)amin (erhältlich unter dem Handelsnamen Dynasylan® 1122 bei der Firma Degussa), Bis (3-trimethoxysilylpropyl)amin (erhältlich unter dem Handelsnamen Dynasylan® 1124 bei der Firma Degussa), Bis-(4-triethoxysilylbutyl)amin, N-(n-butyl)-3-aminopropyltrimethoxysilan (erhältlich unter dem Handelsnamen Dynasylan® 1189 bei der Firma Degussa), N-(n-butyl)-3-aminopropyltriethoxysilan, N-Cyclohexyl-3-aminopropyltrimethoxysilan (erhältlich unter dem Markennamen Geniosil® GF 92 von der Fa. Wacker Chemie), N-Cyclohexyl-3-aminopropyltriethoxysilan, N-Cyclohexylaminomethylmethyldiethoxysilan (erhältlich von der Fa. Wacker Chemie unter dem Handelsnamen Geniosil® XL 924), N-Cyclohexylaminomethyltriethoxysilan (erhältlich von der Fa. Wacker Chemie unter dem Handelsnamen Geniosil® XL 926), N-Phenylaminomethyltrimethoxysilan (erhältlich von der Fa. Wacker Chemie unter dem Handelsnamen Geniosil® XL 973)

Epoxy - funktionelle Silane können insbesondere zur Addition an Carbonsäure- oder Anhydrid- funktionelle Verbindungen eingesetzt werden. Beispiele für geeignete Epoxy - funktionelle Silane sind 3-Glycidyloxypropyltrimethoxysilan (erhältlich bei der Fa. Degussa unter dem Handelsnamen Dynasylan® GLYMO), 3-Glycidyloxypropyltriethoxysilan (erhältlich bei der Fa. Degussa unter dem Handelsnamen Dynasylan® GLYEO)

Anhydrid - funktionelle Silane können insbesondere zur Addition an Epoxy - funktionelle Verbindungen eingesetzt werden. Beispielhaft für ein Silan mit Anhydrid - Funktionalität sei 3-(Triethoxysilyl)propylbernsteinsäureanhydrid (erhältlich von der Fa. Wacker Chemie unter dem Handelsnamen Geniosil® GF 20) genannt. Derartige Silane können im Rahmen von Michael Reaktionen oder auch im Rahmen von metallkatalysierten Reaktionen eingesetzt werden. Beispielhaft werden 3-Methacryloxypropyltrimethoxysilan (erhältlich z. B. bei der Fa. Degussa unter dem Handelsnamen Dynasylan® MEMO, oder bei der Fa. Wacker Chemie unter dem Handelsnamen Geniosil® GF 31), 3-Methacryloxypropyltriethoxysilan, Vinyltrimethoxysilan (erhältlich u. a. bei der Fa. Wacker Chemie unter dem Handelsnamen Geniosil® XL 10), Vinyldimethoxymethylsilan (erhältlich u. a. bei der Fa. Wacker Chemie unter dem Handelsnamen Geniosil® XL 12), Vinyltriethoxysilan (erhältlich u. a. bei der Fa. Wacker Chemie unter dem Handelsnamen Geniosil® GF 56), (Methacryloxymethyl)methyldimethoxysilan (erhältlich u. a. bei der Fa. Wacker Chemie unter dem Handelsnamen Geniosil® XL 32), Methacryloxymethyltrimethoxysilan (erhältlich u. a. bei der Fa. Wacker Chemie unter dem Handelsnamen Geniosil® XL 33), (Methacryloxymethyl)methyldiethoxysilan (erhältlich u. a. bei der Fa. Wacker Chemie unter dem Handelsnamen Geniosil® XL 34), Methacryloxymethyltriethoxysilan (erhältlich u. a. bei der Fa. Wacker Chemie unter dem Handelsnamen Geniosil® XL 36) genannt.

Silane mit Isocyanatofunktion oder Carbamatfunktion kommen insbesondere zum Einsatz im Rahmen von Reaktionen mit Hydroxy-funktionellen Verbindungen. Beispiele für Silane mit Isocyanatofunktion sind beispielsweise in der WO07/03857 beschrieben.

Geeignete Isocyanatoalkyltrialkoxysilane sind beispielsweise Isocyanatopropyltrimethoxysilan, Isocyanatopropylmethyldimethoxysilan, Isocyanatopropylmethyldiethoxysilan, Isocyanatopropyltriethoxysilan,

Isocyanatopropyltriisopropoxysilan, Isocyanatopropylmethydiisopropoxysilan, Isocyanatoneohexyltrimethoxysilan, Isocyanatoneohexyldimethoxysilan, Isocyanatoneohexyldiethoxysilan, Isocyanatoneohexyltriethoxysilan, Isocyanatoneohexyltriisopropoxysilan, Isocyanatoneohexyldiisopropoxysilan, Isocyanatoisoamyltrimethoxysilan, Isocyanatoisoamylmethyldimethoxysilan, Isocyanatoisoamylmethyldiethoxysilan, Isocyanatoisoamyltriethoxysilan, Isocyanatoisoamyltriisopropoxysilan und Isocyanatoisoamylmethyldiisopropoxysilan. Viele Isocyanatoalkyltri- und -di-alkoxysilane sind im Handel beispielsweise unter der Bezeichnung SILQUEST® der Firma OSi Specialties, Inc., einem Unternehmen der Witco Corporation, erhältlich.

Das verwendete Isocyanatopropylalkoxysilan hat bevorzugt einen hohen Reinheitsgrad, insbesondere von mindestens 95%, und ist bevorzugt frei von Additiven, wie Umesterungskatalysatoren, die zu unerwünschten Nebenreaktionen führen können.

Zum Einsatz kommen insbesondere (Isocyanatomethyl)methyldimethoxysilan (erhältlich bei der Fa. Wacker -

Chemie unter dem Markennamen Geniosil® XL 42), 3-Isocyanatopropyltrimethoxysilan (erhältlich bei der Fa. Wacker - Chemie unter dem Markennamen Geniosi®l XL 40) und N-Dimethoxy(methyl)silylmethyl-O-methylcarbamat (erhältlich bei der Fa. Wacker - Chemie unter dem Markennamen Geniosil® XL 65).

Erfindungsgemäß insbesondere bevorzugt sind Beschichtungsmittel, enthaltend mindestens eine hydroxylgruppenhaltige Verbindung (A) sowie mindestens eine isocyanatgruppenhaltige Verbindung (B), die dadurch gekennzeichnet sind, dass ein oder mehrere Bestandteile des Beschichtungsmittels als zusätzliche funktionelle Komponenten zwischen

2,5 und 97,5 mol-%, bezogen auf die Gesamtheit der Struktureinheiten (II) und (III), mindestens einer Struktureinheit der Formel (II)

$$-N(X-SiR''_x(OR')_{3-x})_n(X'-SiR''_y(OR')_{3-y})_m \qquad (II)$$

wobei

R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
bevorzugt R' = Ethyl und/oder Methyl
X,X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
R'' = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R'' = Alkylrest, insbesondere mit 1 bis 6 C-Atomen,
n = 0 bis 2, m = 0 bis 2, m+n = 2 , sowie x,y = 0 bis 2,

und
zwischen 2,5 und 97,5 mol-%, bezogen auf die Gesamtheit der Struktureinheiten (II) und (III), mindestens einer Struktureinheit der Formel (III)

$$-Z-(X-SiR''_x(OR')_{3-x}) \qquad (III),$$

wobei

Z = -NH-, -NR-,-O-, mit
R = Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
x = 0 bis 2,
X, R', R'' die bei Formel (II) angegebene Bedeutung haben

aufweisen.

Ganz besonders bevorzugt sind Beschichtungsmittel, bei denen ein oder mehrere Bestandteile des Beschichtungsmittels zwischen 5 und 95 mol-%, insbesondere zwischen 10 und 90 mol-%, besonders bevorzugt zwischen 20 und 80 mol-%, und ganz besonders zwischen 30 und 70 mol-%, jeweils bezogen auf die Gesamtheit der Struktureinheiten (II) und (III), mindestens einer Struktureinheit der Formel (II) und zwischen 5 und 95 mol-%, insbesondere zwischen 10 und 90 mol-%, besonders bevorzugt zwischen 20 und 80 mol-%, und ganz besonders zwischen 30 und 70 mol-%, jeweils bezogen auf die Gesamtheit der Struktureinheiten (II) und (III), mindestens einer Struktureinheit der Formel (III), aufweisen.

**Die hydroxylgruppenhaltige Verbindung (A)**

Als hydroxylgruppenhaltige Verbindung (A) werden vorzugsweise sowohl niedermolekulare Polyole als auch oligo- und/oder polymere Polyole eingesetzt.
Als niedermolekulare Polyole werden beispielsweise Diole, wie bevorzugt Ethylenglykol, Neopentylglykol, 1,2,-Propandiol, 2,2,-Dimethyl-1,3-Propandiol,1,4-Butandiol, 1,3-Butandiol, 1,5,-Pentandiol, 2,2,4-Trimethyl-1,3-pentandiol, 1,6-Hexandiol, 1,4-Cyclohexandimethanol und 1,2-Cyclohexandimethanol sowie Polyole, wie bevorzugt Trimethylolethan, Trimethylolpropan, Trimethylolhexan, 1,2,4-Butantriol, Pentaerytritol sowie Dipentaerytritol, eingesetzt.
Bevorzugt werden solche niedermolekularen Polyole in untergeordneten Anteilen der oligo- und/oder polymeren Polyolkomponente (A) beigemischt.
Die bevorzugten oligo- und/oder polymeren Polyole (A) weisen massenmittlere Molekulargewichte Mw > 500 Dalton,

gemessen mittels GPC (Gelpermeationschromatographie), bevorzugt zwischen 800 und 100.000 Dalton, insbesondere zwischen 1.000 und 50.000 Dalton auf. Besonders bevorzugt sind Polyesterpolyole, Polyurethanpolyole, Polysiloxanpolyole und insbesondere Polyacrylatpolyole und/oder Polymethacrylatpolyole sowie deren Mischpolymerisate, im folgenden Polyacrylatpolyole genannt. Die Polyole weisen bevorzugt eine OH-Zahl von 30 bis 400 mg KOH/g, insbesondere zwischen 100 und 300 KOH/g, auf. Die Glasübergangstemperaturen, gemessen per DSC (Differential-Thermoanalyse), der Polyole liegen bevorzugt zwischen -150 und 100 °C, besonders bevorzugt zwischen - 120°C und 80°C.
Geeignete Polyesterpolyole sind beispielsweise in EP-A-0 994 117 und EP-A-1 273 640 beschrieben. Polyurethanpolyole werden vorzugsweise durch Umsetzung von Polyesterpolyol-Präpolymeren mit geeigneten Di- oder Polyisocyanaten hergestellt und sind beispielsweise in EP-A-1 273 640 beschrieben. Geeignete Polysiloxanpolyole sind beispielsweise in der WO-A-01/09260 beschrieben, wobei die dort angeführten Polysiloxanpolyole bevorzugt in Kombination mit weiteren Polyolen, insbesondere solchen mit höheren Glasübergangstemperaturen, zum Einsatz kommen können.

Die erfindungsgemäß ganz besonders bevorzugten Polyacrylatpolyole sind in der Regel Copolymerisate und weisen vorzugsweise massenmittlere Molekulargewichte Mw zwischen 1.000 und 20.000 Dalton, insbesondere zwischen 1.500 und 10.000 Dalton auf, jeweils gemessen mittels Gelpermeationschromatographie (GPC) gegen einen Polystyrolstandard. Die Glasübergangstemperatur der Copolymerisate liegt in der Regel zwischen -100 und 100 °C, insbesondere zwischen -50 und 80 °C (gemessen mittels DSC-Messungen). Die Polyacrylatpolyole weisen bevorzugt eine OH-Zahl von 60 bis 250 mg KOH/g, insbesondere zwischen 70 und 200 KOH/g, sowie eine Säurezahl zwischen 0 und 30 mg KOH/g, auf.

Die Hydroxylzahl (OH-Zahl) gibt an, wieviel mg Kaliumhydroxid der Essigsäure-Menge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidlösung titriert (DIN 53240-2).). Die Säurezahl gibt hierbei die Anzahl der mg Kaliumhydroxyid an, die zur Neutralisation von 1 g der jeweiligen Verbindung der Komponente (b) verbraucht wird (DIN EN ISO 2114).

Als hydroxylgruppenhaltige Monomerbausteine werden bevorzugt Hydroxyalkylacrylate und/oder Hydroxyalkylmethacrylate, wie insbesondere 2-Hydroxyethylacrylat, 2-Hydroxyethylmethacrylat, 2- Hydroxypropylacrylat, 2-Hydroxypropylmethacrylat, 3-Hydroxypropylacrylat, 3-Hydroxypropylmethacrylat , 3-Hydroxybutylacrylat, 3-Hydroxybutylmethacrylat sowie insbesondere 4-Hydroxybutylacrylat und/oder 4-Hydroxybutylmethacrylat, eingesetzt.

Als weitere Monomerbausteine werden für die Polyacrylatpolyole bevorzugt Alkylmethacrylate und/oder Alkylmethacrylate eingestetzt, wie vorzugsweise Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat oder insbesondere Cyclohexylacrylat und/oder Cyclohexylmethacrylat.

Als weitere Monomerbausteine für die Polyacrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

In einer weiteren Ausführungsform der Erfindung weist die hydroxylgruppenhaltige Verbindung A neben den Hydroxylgruppen Struktureinheiten der Formel (I) und/oder der Formel (II) und/oder der Formel (III) auf.

Struktureinheiten der Formel (II) können in die Verbindung (A) durch Einbau von Monomereinheiten mit solchen Struktureinheiten oder durch Umsetzung von Polyolen, die weitere funktionelle Gruppen aufweisen, mit einer Verbindung der Formel (IIa)

$$HN(X\text{-}SiR''_x(OR')_{3-x})_n(X'\text{-}SiR''_y(OR')_{3-y})_m \qquad \text{(IIa)},$$

eingeführt werden, wobei die Substituenten die obengenannte Bedeutung haben. Zur Umsetzung des Polyols mit der Verbindung (IIa) weist dieses entsprechend weitere funktionelle Gruppen auf, welche mit der sekundären Aminogruppe der Verbindung (IIa) reagieren, wie insbesondere Säure- oder Epoxygruppen. Erfindungsgemäß bevorzugte Verbindungen (IIa) sind Bis(2-ethyltrimethoxysilyl)amin, Bis(3-propyltrimethoxysilyl)amin, Bis(4-butyltrimethoxysilyl)amin, Bis(2-ethyltriethoxysilyl)amin, Bis(3-propyltriethoxysilyl)amin und/oder Bis(4-butyltriethoxysilyl)amin. Ganz besonders bevorzugt ist Bis(3-propyltrimethoxysilyl)amin. Solche Aminosilane sind beispielsweise unter dem Markennamen DYNASYLAN ® der Fa. DEGUSSA bzw. Silquest ® der Fa. OSI verfügbar.

Monomerbausteine, die die Strukturelemente (II) tragen, sind vorzugsweise Umsetzungsprodukte der Acryl- und/oder der Methacrylsäure oder von epoxygruppenhaltigen Alkylacrylaten und/oder -methacrylaten mit den oben genannten Verbindungen (IIa).

Struktureinheiten der Formel (III) können in die Verbindung (A) durch Einbau von Monomereinheiten mit solchen Struktureinheiten oder durch Umsetzung von Polyolen, die weitere funktionelle Gruppen aufweisen, mit einer Verbindung

der Formel (IIIa)

H-Z-(X-SiR"x(OR')3-x) (IIIa),

eingeführt werden, wobei die Substituenten die obengenannte Bedeutung haben. Zur Umsetzung des Polyols mit der Verbindung (IIIa) weist dieses entsprechend weitere funktionelle Gruppen auf, welche mit der funktionellen Gruppe -ZH der Verbindung (IIIa) reagieren, wie insbesondere Säure-, Epoxy- oder Estergruppen. Erfindungsgemäß bevorzugte Verbindungen (IIIa) sind omega-Aminoalkyl- oder omega-Hydroxyalkyltrialkoxysilane, wie vorzugsweise 2-Aminoethyltrimethoxysilan, 2-Aminoethyltriethoxysilan, 3-Aminopropyltrimethoxysilan, 3-Aminopropyltriethoxysilan, 4-Aminobutyltrimethoxysilan, , 4-Aminobutyltriethoxysilan, 2-Hydroxyethyltrimethoxysilan, 2-Hydroxyethyltriethoxysilan, 3-Hydroxypropyltrimethoxysilan, 3-Hydroxypropyltriethoxysilan, 4-Hydroxybutyltrimethoxysilan, 4-Hydroxybutyltriethoxysilan. Besonders bevorzugte Verbindungen (IIIa) sind N-(2-(trimethoxysilyl)ethyl)alkylamine, N-(3-(trimethoxysilyl) propyl)alkylamine, N-(4-(trimethoxysilyl) butyl)alkylamine , N-(2-(triethoxysilyl) ethyl)alkylamine, N-(3-(triethoxysilyl) propyl)alkylamine und/oder N-(4-(triethoxysilyl) butyl)alkylamine. Ganz besonders bevorzugt ist N-(3-(trimethoxysilyl) propyl)butylamin. Solche Aminosilane sind beispielsweise unter dem Markennamen DYNASYLAN ® der Fa. DEGUSSA bzw. Silquest ® der Fa. OSI verfügbar.

Monomerbausteine, die die Strukturelemente (III) tragen, sind vorzugsweise Umsetzungsprodukte der Acryl- und/oder der Methacrylsäure oder von epoxygruppenhaltigen Alkylacrylaten und/oder -methacrylaten, sowie im Falle hydroxyfunktioneller Alkoxylsilylverbindungen Umesterungsprodukte von Alkylacrylaten und/oder -methacrylaten, insbesondere mit den oben genannten hydroxy- und/oder aminofunktionellen Alkoxysilylverbindungen (IIIa).

**Die isocyanatgruppenhaltigen Verbindungen (B)**

Als Komponente (B) enthalten die erfindungsgemäßen Beschichtungsmittel eine oder mehrere Verbindungen mit freien, d.h. unblockierten, und/oder blockierten Isocyanatgruppen. Bevorzugt enthalten die erfindungsgemäßen Beschichtungsmittel Verbindungen (B) mit freien Isocyanatgruppen. Die freien Isocyanatgruppen des isocyanatgruppenhaltigen Verbindungen B können aber auch in blockierter Form eingesetzt werden. Dies ist bevorzugt dann der Fall, wenn die erfindungsgemäßen Beschichtungsmittel als einkomponentige Systeme eingesetzt werden.

Die als Grundkörper für die erfindungsgemäß bevorzugt eingesetzten isocyanatgruppenhaltigen Verbindungen (B) dienenden Di- und/oder Polyisocyanate sind bevorzugt an sich bekannte substituierte oder unsubstituierte aromatische, aliphatische, cycloaliphatische und/oder heterocyclische Polyisocyanate. Beispiele für bevorzugte Polyisocyanate sind: 2,4-Toluoldiisocyanat, 2,6-Toluoldiisocyanat, Diphenylmethan-4,4'-diisocyanat, Diphenylmethan-2,4'-diisocyanat, p-Phenylendiisocyanat, Biphenyldiisocyanate, 3,3'-Dimethyl-4,4'-diphenylendiisocyanat, Tetramethylen-1,4-diisocyanat, Hexamethylen-1,6-diisocyanat, 2,2,4-Trimethylhexane-1,6-diisocyanat, Isophorondiisocyanat, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiisocyanate, Hexahydrotoluol-2,4-diisocyanat, Hexahydrotoluol-2,6-diisocyanat, Hexahydrophenylen-1,3-diisocyanat, Hexahydrophenylen-1,4-diisocyanat, Perhydrodiphenylmethan-2,4'-diisocyanat, 4,4'-Methylendicyclohexyldiisocyanat (z.B. Desmodur ® W der Fa. Bayer AG), Tetramethylxylyldiisocyanate (z.B. TMXDI ® der Fa. American Cyanamid) und Mischungen der vorgenannten Polyisocyanate.

Weiterhin bevorzugte Polyisocyanate sind die Biuret-Dimere und die Isocyanurat-Trimere der vorgenannten Diisocyanate.

Besonders bevorzugte Polyisocyanate sind Hexamethylen-1,6-diisocyanat, Isophorondiisocyanat und 4,4'-Methylendicyclohexyldiisocyanat, deren Biuret-Dimere und/oder Isocyanurat-Trimere.

In einer weiteren Ausführungsform der Erfindung sind die Polyisocyanate Polyisocyanat-Präpolymerisate mit Urethan-Struktureinheiten, welche durch Umsetzung von Polyolen mit einem stöchiometrischen Überschuß an vorgenannten Polyisocyanaten erhalten werden. Solche Polyisocyanat-Präpolymere sind beispielsweise in US-A-4,598,131 beschrieben.

Die erfindungsgemäß ganz besonders bevorzugten, mit den Struktureinheiten (II) und (III) funktionalisierten isocyanatgruppenhaltigen Verbindungen (B) werden bevorzugt durch Umsetzung der vorgenannten Di- und/oder Polyisocyanate mit den vorgenannten Verbindungen (IIa) und (IIIa) hergestellt, indem

zwischen 2,5 und 90 mol-%, bevorzugt 5 bis 85 mol-%, besonders bevorzugt 7,5 bis 80 mol-%, der Isocyanatgruppen im Polyisocyanatgrundkörper mit mindestens einer Verbindung (Ia) und

zwischen 2,5 und 90 mol-%, bevorzugt 5 bis 85 mol-%, besonders bevorzugt 7,5 bis 80 mol-%, der Isocyanatgruppen im Polyisocyanatgrundkörper mit mindestens einer Verbindung (IIIa)

umgesetzt werden.

Der Gesamtanteil der mit den Verbindungen (IIa) und (IIIa) umgesetzten Isocyanatgruppen liegt in der Polyisocyanatverbindung (B) zwischen 5 und 95 mol-%, bevorzugt zwischen 10 und 90 mol-%, besonders bevorzugt zwischen 15 und 85 mol-% der Isocyanatgruppen im Polyisocyanatgrundkörper. Insbesondere bei einem hohen Silanisierungsgrad, d.h. wenn ein hoher Anteil der Isocyanatgruppen, insbesondere von mindestens 50 mol-%, mit den Verbindungen (IIa) / (IIIa) umgesetzt worden ist, werden die Isocyanatgruppen vorteilhafterweise mit einer Mischung der Verbindungen (IIa) und (IIIa) umgesetzt.

Besonders bevorzugte Verbindungen (IIa) sind Bis(2-ethyltrimethoxysilyl)amin, Bis(3-propyltrimethoxysilyl)amin, Bis(4-butyltrimethoxysilyl)amin, Bis(2-ethyltriethoxysilyl)amin, Bis(3-propyltriethoxysilyl)amin und/oder Bis(4-butyltriethoxysilyl)amin. Ganz besonders bevorzugt ist Bis(3-propyltrimethoxysilyl)amin. Solche Aminosilane sind beispielsweise unter dem Markennamen DYNASYLAN ® der Fa. DEGUSSA bzw. Silquest ® der Fa. OSI verfügbar.

Bevorzugte Verbindungen (IIIa) sind 2-Aminoethyltrimethoxysilan, 2-Aminoethyltriethoxysilan, 3-Aminopropyltrimethoxysilan, 3-Aminopropyltriethoxysilan, 4-Aminobutyltrimethoxysilan, , 4-Aminobutyltriethoxysilan, 2-Hydroxyethyltrimethoxysilan, 2-Hydroxyethyltriethoxysilan, 3-Hydroxypropyltrimethoxysilan, 3-Hydroxypropyltriethoxysilan, 4-Hydroxybutyltrimethoxysilan, 4-Hydroxybutyltriethoxysilan.

Besonders bevorzugte Verbindungen (IIIa) sind N-(2- (trimethoxysilyl) ethyl)alkylamine, N-(3-(trimethoxysilyl) propyl)alkylamine, N-(4-(trimethoxysilyl) butyl)alkylamine , N-(2-(triethoxysilyl) ethyl)alkylamine, N-(3-(triethoxysilyl) propyl)alkylamine und/oder N-(4-(triethoxysilyl) butyl)alkylamine. Ganz besonders bevorzugt ist N-(3-(trimethoxysilyl) propyl)butylamin. Solche Aminosilane sind beispielsweise unter dem Markennamen DYNASYLAN ® der Fa. DEGUSSA bzw. Silquest ® der Fa. OSI verfügbar.

Ganz besonders bevorzugte isocyanatgruppenhaltige Verbindungen (B) sind Umsetzungsprodukte von Hexamethylen-1,6-diisocyanat und/oder Isophorondiisocyanat, und/oder deren Isocyanurat-Trimere mit Bis(3-propyltrimethoxysilyl)amin und N-(3-(trimethoxysilyl) propyl)butylamin.

Die Umsetzung der isocyanatgruppenhaltigen Verbindungen (B) mit den Verbindungen (IIa) und (IIIa) erfolgt vorzugsweise in Inertgasatmosphäre bei Temperaturen von maximal 100 °C, bevorzugt von maximal 60 °C.

Die freien Isocyanatgruppen des isocyanatgruppenhaltigen Verbindungen B können auch in blockierter Form eingesetzt werden. Dies ist bevorzugt dann der Fall, wenn die erfindungsgemäßen Beschichtungsmittel als einkomponentige Systeme eingesetzt werden. Zur Blockierung kann im Prinzip jedes für die Blockierung von Polyisocyanaten einsetzbare Blockierungsmittel mit einer ausreichend tiefen Deblockierungstemperatur eingesetzt werden. Derartige Blockierungsmittel sind dem Fachmann gut geläufig. Bevorzugt werden Blockierungsmittel, wie sie in EP-A-0 626 888 und EP-A-0 692 007 beschrieben sind, eingesetzt.

## Die Kombination der Komponenten A und B sowie weitere Komponenten des Beschichtungsmittels

Der Gewichtsanteil der einzusetzenden hydroxylgruppenhaltigen Verbindungen A, bezogen auf den Gewichtsanteil der isocyanatgruppenhaltigen Verbindungen B, hängt vom Hydroxyäquivalentgewicht des Polyols und vom Äquivalentgewicht der freien Isocyanatgruppen des Polyisocyanats B ab.

Es ist bevorzugt, dass im erfindungsgemäßen Beschichtungsmittel ein oder mehrere Bestandteile zwischen 2,5 bis 97,5 mol-%, bezogen auf die Summe der Struktureinheiten (II) und (III), mindestens einer Struktureinheit (II) und zwischen 2,5 bis 97,5 mol-%, bezogen auf die Summe der Struktureinheiten (II) und (III), mindestens einer Struktureinheit (III) aufweisen.

Die erfindungsgemäßen Beschichtungsmittel enthalten bevorzugt zwischen 2,5 und 97,5 Gew.-%, besonders bevorzugt zwischen 5 und 95 Gew.-%, ganz besonders bevorzugt zwischen 10 und 90 Gew.-%, insbesondere zwischen 20 und 80 Gew.-%, bezogen auf den Gehalt an nichtflüchtigen Substanzen im Beschichtungsmittel, der hydroxylgruppenhaltigen Verbindungen (A) und bevorzugt zwischen 2,5 und 97,5 Gew.-%, besonders bevorzugt zwischen 5 und 95 Gew.-%, ganz besonders bevorzugt zwischen 10 und 90 Gew.-%, insbesondere zwischen 20 und 80 Gew.-%, bezogen auf den Gehalt an nichtflüchtigen Substanzen im Beschichtungsmittel, der isocyanatgruppenhaltigen Verbindungen (B).

Bezogen auf die Summe der für die Vernetzung im erfindungsgemäßen Beschichtungsmittel maßgeblichen funktionellen Gruppen, gebildet aus den Anteilen der Hydroxyl- und Isocyanatgruppen sowie den Anteilen der Strukturelemente (I) und/oder (II) und/oder (III), sind die Strukturelemente (I) und/oder (II) und/oder (III) bevorzugt in Anteilen von 2,5 bis 97,5 mol-%, besonders bevorzugt zwischen 5 und 95 mol-% und ganz besonders bevorzugt zwischen 10 und 90 mol-%, vorhanden.

In einer weiteren Ausführungsform der Erfindung können die Strukturelemente (I), (II) und/oder (III) zusätzlich auch Bestandteil einer oder mehrerer, sich von den Komponenten (A) und (B) unterscheidender weiterer Komponenten (D) sein, wobei die vorgenannten Kriterien anzuwenden sind. Beispielsweise können als Komponente (D) Oligomerisate oder Polymerisate mit Alkoxysilyl-Gruppen eingesetzt werden, wie beispielsweise die in den Patent(anmeldung)en US-A-4,499,150, US-A-4,499,151 oder EP-A-0 571 073 genannten Poly(meth)acrylate als Träger von Strukturelementen (III) oder die in der WO-A-2006/042585 genannten Verbindungen als Träger von Strukturelementen (II). In der Regel werden solche Komponenten (D) in Anteilen von bis zu 40 Gew.-%, bevorzugt von bis zu 30 Gew.-%, besonders bevorzugt von bis zu 25 Gew.-%, bezogen auf die nichtflüchtigen Bestandteile des Beschichtungsmittels, eingesetzt.

Die Gewichtsanteile des Polyols A und des Polyisocyanats B werden vorzugsweise solchermaßen gewählt,

dass das molare Äquivalentverhältnis der nicht umgesetzten Isocyanatgruppen der isocyanathaltigen Verbindungen (B) zu den Hydroxylgruppen der hydroxylgruppenhaltigen Verbindungen (A) zwischen 0,9:1 und 1:1,1, bevorzugt zwischen 0,95:1 und 1,05:1, besonders bevorzugt zwischen 0,98:1 und 1,02:1, liegt.

Handelt es sich um einkomponentige Beschichtungsmittel, so werden die isocyanatgruppenhaltigen Verbindungen (B) gewählt, deren freie Isocyanatgruppen mit den oben beschriebenen Blockierungsmitteln blockiert sind.

Bei den erfindungsgemäß bevorzugten 2-komponentigen (2K) Beschichtungsmitteln wird kurz vor der Applikation des Beschichtungsmittel eine Lackkomponente, enthaltend die hydroxylgruppenhaltige Verbindung (A) sowie weitere nachfolgend beschriebene Komponenten, mit einer weiteren Lackkomponente, enthaltend die isocyanatgruppenhaltige Verbindung (B) und gegebenenfalls weitere der nachfolgend beschriebenen Komponenten in an sich bekannter Weise vermischt, wobei in der Regel die Lackkomponente, die die Verbindung (A) enthält, den Katalysator sowie einen Teil des Lösemittels enthält.

Als Lösemittel für die erfindungsgemäßen Beschichtungsmittel sind insbesondere solche geeignet, die im Beschichtungsmittel chemisch inert gegenüber den Verbindungen (A) und (B) sind und die auch bei der Härtung des Beschichtungsmittels nicht mit (A) und (B) reagieren. Beispiele für solche Lösemittel sind aliphatische und/oder aromatische Kohlenwasserstoffe wie Toluol, Xylol, Solventnaphtha, Solvesso 100 oder Hydrosol ® (Fa. ARAL), Ketone, wie Aceton, Methylethylketon oder Methylamylketon, Ester, wie Ethylacetat, Butylacetat, Pentylacetat oder Ethylethoxypropionat, Ether oder Mischungen aus den vorgenannten Lösemitteln. Bevorzugt weisen die aprotischen Lösemittel oder Lösemittelgemische einen Wassergehalt von maximal 1 Gew.-%, besonders bevorzugt maximal 0,5 Gew.-%, bezogen auf das Lösemittel auf.

Neben den Verbindungen (A), (B) und (D) können noch weitere Bindemittel (E) eingesetzt werden, welche vorzugsweise mit den Hydroxylgruppen der Verbindung (A) und/oder mit den freien Isocyanatgruppen der Verbindung (B) und/oder mit den Alkoxysilylgruppen der Verbindungen (A), (B) und/oder (D) reagieren und Netzwerkpunkte ausbilden können.

Beispielsweise sind als Komponente (E) Aminoplastharze und/oder Epoxyharze, verwendbar. Es kommen die üblichen und bekannten Aminoplastharze in Betracht, deren Methylol- und/oder Methoxymethylgruppenteilweise mittels Carbamat- oder Allophanatgruppen defunktionalisiert sein können. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

In der Regel werden solche Komponenten (E) in Anteilen von bis zu 40 Gew.-%, bevorzugt von bis zu 30 Gew.-%, besonders bevorzugt von bis zu 25 Gew.-%, bezogen auf die nichtflüchtigen Bestandteile des Beschichtungsmittels, eingesetzt.

Darüber hinaus kann das erfindungsgemäße Beschichtungsmittel mindestens ein übliches und bekanntes Lackadditiv in wirksamen Mengen, d.h. in Mengen vorzugsweise bis zu 30 Gew.-%, besonders bevorzugt bis zu 25 Gew.-% und insbesondere bis zu 20 Gew.-%, jeweils bezogen auf die nichtflüchtigen Bestandteile des Beschichtungsmittels, enthalten.

Beispiele geeigneter Lackadditive sind:

- insbesondere UV-Absorber;
- insbesondere Lichtschutzmittel wie HALS-Verbindungen, Benztriazole oder Oxalanilide;
- Radikalfänger;
- Slipadditive;
- Polymerisationsinhibitoren;
- Entschäumer;
- Reaktiwerdünner, wie sie aus dem Stand der Technik allgemein bekannt sind, welche bevorzugt inert gegenüber den -Si(OR)3-Gruppen sind.
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- rheologiesteuernde Additive, wie die aus den Patentschriften WO 94/22968, EP-A-0 276 501, EP-A-0 249 201 oder WO 97/12945 bekannten Additive; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische

Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate;

- und /oder Flammschutzmittel.

In einer weiteren Ausführungsform der Erfindung kann das erfindungsgemäße Beschichtungsmittel noch weitere Pigmente und/oder Füllstoffe enthalten und zur Herstellung pigmentierter Topcoats dienen. Die dafür eingesetzten Pigmente und/oder Füllstoffe sind dem Fachmann bekannt.

Da die aus den erfindungsgemäßen Beschichtungsmitteln hergestellten Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)lackierung ausgezeichnet für die Autoreparaturlackierung oder die modulare Kratzfestausrüstung von bereits lackierten Automobilkarosserien.

Die Applikation der erfindungsgemäßen Beschichtungsmittel kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Aushärtung der applizierten erfindungsgemäßen Beschichtungsmittel kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung). Vorteilhafterweise erfolgt die thermische Härtung bei einer Temperatur von 30 bis 200°C, besonders bevorzugt 40 bis 190°C und insbesondere 50 bis 180°C während einer Zeit von 1 min bis zu 10 h, besonders bevorzugt 2 min bis zu 5 h und insbesondere 3 min bis 3 h, wobei bei den für die Automobilreparaturlackierung angewandten Temperaturen, die bevorzugt zwischen 30 und 90°C liegen, auch längere Härtzeiten zur Anwendung kommen können.

Die erfindungsgemäßen Beschichtungsmittel liefern neue gehärtete Beschichtungen, insbesondere Lackierungen, speziell Klarlackierungen, Formteile, speziell optische Formteile, und freitragende Folien, die hoch kratzfest und insbesondere chemikalien- und witterungsstabil sind. Insbesondere lassen sich die erfindungsgemäßen Beschichtungen und Lackierungen, speziell die Klarlackierungen, auch in Schichtdicken > 40 $\mu$m herstellen, ohne dass Spannungsrisse auftreten.

Die erfindungsgemäßen Beschichtungsmittel eignen sich daher hervorragend als dekorative, schützende und/oder effektgebende, hoch kratzfeste Beschichtungen und Lackierungen von Karosserien von Fortbewegungsmitteln (insbesondere Kraftfahrzeuge, wie Motorräder, Busse, LKW oder PKW) oder von Teilen hiervon; von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Insbesondere werden die erfindungsgemäßen Beschichtungsmittel und Lackierungen, insbesondere die Klarlackierungen, in dem technologisch und ästhetisch besonders anspruchsvollen Gebiet der Automobilserienlackierung (OEM) sowie der Automobilreparaturlackierung eingesetzt. Besonders bevorzugt werden die erfindungsgemäßen Beschichtungsmittel in mehrstufigen Beschichtungsverfahren eingesetzt, insbesondere bei Verfahren, bei dem auf ein gegebenenfalls vorbeschichtetes Substrat zunächst eine pigmentierte Basislackschicht und danach eine Schicht mit den erfindungsgemäßen Beschichtungsmittel aufgetragen werden.

Es können sowohl wasserverdünnbare Basislacke als auch Basislacke auf Basis von organischen Lösemitteln eingesetzt werden. Geeignete Basislacke sind beispielsweise in der EP-A-0 692 007 und in den dort in Spalte 3, Zeilen 50ff., angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80°C. Nach der Trocknung wird das erfindungsgemäße Beschichtungsmittel aufgebracht. Anschließend wird die Zweischichtlackierung bevorzugt unter bei der Automobilserienlackierung angewandten Bedingungen bei Temperaturen von 30 bis 200°C, besonders bevorzugt 40 bis 190°C und insbesondere 50 bis 180°C, während einer Zeit von 1 min bis zu 10 h, besonders

bevorzugt 2 min bis zu 5 h und insbesondere 3 min bis 3 h, eingebrannt, wobei bei den für die Automobilreparaturlackierung angewandten Temperaturen, die bevorzugt zwischen 30 und 90°C liegen, auch längere Härtzeiten zur Anwendung kommen können.

Die mit dem erfindungsgemäßen Beschichtungsmittel erzeugten Schichten zeichnen sich vor allem durch eine besonders hohe Chemikalien- und Witterungsbeständigkeit sowie eine sehr gute Waschstraßenbeständigkeit und Kratzfestigkeit aus, insbesondere durch eine herausragende Kombination von Kratzfestigkeit und Witterungsstabilität gegen UV-Strahlung im Feucht-Trockenzyklus.

In einer weiteren bevorzugten Ausführungsform der Erfindung wird das erfindungsgemäße Beschichtungsmittel als transparenter Klarlack zur Beschichtung von Kunststoffsubstraten, insbesondere von transparenten Kunststoffsubstraten, eingesetzt. In diesem Fall beinhalten die Beschichtungsmittel UV-Absorber, die in Menge und Art auch auf den wirksamen UV-Schutz des Kunststoffsubstrats ausgelegt sind. Auch hier zeichnen sich die Beschichtungsmittel durch eine herausragende Kombination von Kratzfestigkeit und Witterungsstabilität gegen UV-Strahlung im Feucht-Trockenzyklus aus. Die solchermaßen beschichteten Kunststoffsubstrate werden vorzugsweise für den Ersatz von Glaskomponenten im Automobilbau eingesetzt, wobei die Kunststoffsubstrate bevorzugt aus Polymethylmethacrylat oder Polycarbonat bestehen.

**Herstellbeispiele**

Silansierter Härter 1:

Ansatz:

- Pos 1:57,30g (0,100mol) Polyisocyanurat aus HDI (Hexamethyl-1,6-diisocyanat), Basonat® HI 100
- Pos 2: 63,74g Solventnaphtha (Gemisch aus aromatischen Kohlenwasserstoffen)
- Pos 3: 51,23g (0,150 mol) Bis-[3-(trimethoxysilyl)-propyl]-amin, Dynasylan 1124®

Durchführung:

In einem 250 ml Dreihalskolben mit Rührmagnet, Innenthermometer und Tropftrichter werden Pos 1 und 2 vorgelegt. Die klare, farblose Lösung wird bei Raumtemperatur unter Stickstoffüberschleierung und Rückfluss gerührt. Pos 3 wird langsam zugetropft, so dass die Temperatur nicht über 60°C steigt. Nach Ende Pos 3 liegt eine klare, gelbliche Lösung vor. Die Temperatur beträgt 56°C und wird mittels Heizrührplatte und Ölbad für 4 Stunden bei 50-60°C gehalten. Die Bestimmung des freien Isocyanatgehalts erfolgt durch Titration. Das Produkt wird mit einem 31μm Sieb gesiebt.

Kennzahlen:

| | |
|---|---|
| theor.:nfA [%] | 63,00 |
| theor. NCO-Gehalt bezogen auf nfA [%] | 5,81 |
| Blockierungsgrad der NCO-Gruppen [%] | 50 |
| Viskosität [mPas] | 70 |

Silansierter Härter 2:

Ansatz:

- Pos 1:57,30g (0,100 mol) Polyisocyanurat aus HDI (Hexamethyl-1,6-diisocyanat), Basonat® HI 100
- Pos 2: 62,70g Solventnaphtha (Gemisch aus aromatischen Kohlenwasserstoffen)
- Pos 3: 25,62g (0,075mol) Bis-[3-(trimethoxysilyl)-propyl]-amin, Dynasylan 1124®
- Pos 4: 17,65g (0,075mol) N-[3-(trimethoxysilyl)-propyl]-butylamin, Dynasylan 1189®

Durchführung:

In einem 250 ml Dreihalskolben mit Rührmagnet, Innenthermometer und Tropftrichter werden Pos 1 und 2 vorgelegt. Die klare, farblose Lösung wird bei Raumtemperatur unter Stickstoffüberschleierung und Rückfluss gerührt. **Eine Mischung aus Pos 3 und 4 wird langsam zugetropft,** so dass die Temperatur nicht über 60°C steigt. **Nach Ende Pos 3 und 4 liegt eine klare,** leicht gelbliche Lösung vor. Die Temperatur beträgt 56°C und wird mittels Heizrührplatte und Ölbad für 4 Stunden bei 50-60°C gehalten. Die Bestimmung des freien Isocyanatgehalts erfolgt durch Titration. Das Produkt wird mit einem 31 μm Sieb gesiebt.

Kennzahlen:

| | |
|---|---|
| theor.:nfA [%] | 63,00 |
| theor. NCO-Gehalt bezogen auf nfA [%] | 6,3 |
| Blockierungsgrad der NCO-Gruppen [%] | 50 |

Durch den gleichzeitigen Einsatz von Bis- und Monosilanaminen wird eine verbesserte Kratzfestigkeit bei gleichzeitig guten Bewitterungseigenschaften erzielt. Gegenüber den reinen Bissilanverbindungen wird eine Verbesserung hinsichtlich der vorzeitigen Rissbildung in der Schnellbewitterung und der notwendigen Kratzfestigkeit erzielt.

**Phosphorsäureester-Katalysator:**

**Katalysator auf Triethylaminbasis:**

Ansatz:

- Pos 1: 10,62 g (0,105 mol) Triethylamin
- Pos 2: 32,24 g (0,100 mol) Bis(2-Ethylhexyl)-phosphat
- Pos 3: 10,00 g (0,100 mol) Methylisobutylketon
- Pos 4: 10,00 g (0,113 mol) Ethylacetat

Durchführung:

In einem 100 ml Dreihalskolben mit Rührmagnet, Innenthermometer und Tropftrichter werden Pos 2, 3 und 4 vorgelegt. Die klare, farblose Flüssigkeit wird bei Raumtemperatur unter Stickstoffüberschleierung und Rückfluss gerührt. Pos 1 wird langsam zugetropft, so dass die Temperatur nicht über 45°C steigt. Nach Ende Pos 1 liegt eine klare, farblose Lösung vor. Die Temperatur beträgt 40°C und wird mittels Heizrührplatte und Ölbad 3 Stunden gehalten. Im Anschluss wird das Lösungsmittel (Pos 3 und 4) mittels Rotationsverdampfer bei 65°C und 20 mbar abdestilliert. Man erhält eine klare, farblose Lösung. Die Ausbeute beträgt 40,20g (94%). Anschließend wird auf einen nfA von 25% mit Isopropanol eingestellt. (nfA = nicht flüchtiger Anteil, bestimmt durch Auswiegen nach 1 Stunde bei 130°C)

Kennzahlen:

- Viskosität $\eta$ [mPas]: 124,7 mPas, T = 23,0°C
- Brechungsindex n: $n_D^{20}$ = 1,4488
- Säurezahl SZ [mg KOH/g]: 144 mg KOH/g
- pH-Wert: pH = 6; T = 24°C

**Katalysator auf DABCO-Basis:**

Ansatz:

- Pos 1: 11,78 g (0,105 mol) 1,4-Diazabicyclo(2.2.2)octan [DABCO Crystal]
- Pos 2: 32,24 g (0,100 mol) Bis(2-Ethylhexyl)-phosphat
- Pos 3: 10,00 g (0,100 mol) Methylisobutylketon
- Pos 4: 20,00 g (0,226 mol) Ethylacetat

Durchführung:

In einem 100 ml Dreihalskolben mit Rührmagnet, Innenthermometer und Tropftrichter werden Pos 1, 3 und 4 vorgelegt. Pos 1 wird bei 44°C unter Stickstoffverschleierung und Rückfluss gerührt und gelöst. Pos 2 wird langsam zugetropft, so dass die Temperatur nicht über 50°C steigt. Nach Ende Pos 1 liegt eine klare, leicht gelbe Lösung vor. Die Temperatur beträgt 48°C und wird mittels Heizrührplatte und Ölbad für 3 Stunden bei 40°C gehalten. Im Anschluss wird das Lösungsmittel (Pos 3 und 4) mittels Rotationsverdampfer bei 65°C und 20 mbar abdestilliert. Man erhält eine weiße, gelartige Masse, welche bei Raumtemperatur erstarrt. Die Ausbeute beträgt 41,00 g (93%).

Kennzahlen:

- Säurezahl SZ [mg KOH/g]: 134 mg KOH/g
- pH-Wert: pH = 7; T = 24°C

Formulierung:

| Pos | Produkt | nfA m | Rezeptur m-% |
|---|---|---|---|
| | **Bindemittel** | | |
| 01 | Polyacrylat OHZ 156 mg KOH/g, (52,40±1,00%ig in Lösemittelgemisch) | 17,26 | 32,94 |
| 02 | Solventnaphtha | | 12 |
| 03 | Katalysator X | X | X |
| | **Härter** | | |
| 04 | Modifiziertes HDI-Isocyanurat (aus Herstellbeispiel silanisierter Härter) NCO-Gehalt: 5,81 ± 1,00% (63,00±2,00%tig in Solventnaphtha) | 34,69 | 55,06 |
| | **Gesamt-Summe** | 51,95 | 100,00 |
| | Verarbeitungsviskosität ca. 50s (ISO 4) | | |
| X = für DABCO basierten Katalysator: (erfindungsgemäß) 0,28<br>X = für Triethylaminbasierten Katalysator: (Vergleich) 0,26 | | | |

**Anhang**

**Bestimmung des $pK_b$-Wertes:**

**1. Zusammenfassung**

Die Dissoziationskonstante ($pK_a$) der Prüfsubstanz bei 23 °C und einer Prüfsubstanzkonzentration von etwa

0,01 m beträgt:

$$pK_a = 9{,}90 \pm 0{,}06$$

**2. Experimentelles**

Literatur:

Die Bestimmung erfolgt in Anlehnung an die OECD GUIDELINE FOR TESTING OF CHEMICALS, 112 (1981) "Dissoziation Constants in Water" sowie die Monographie:

A. Albert, E.P. Serjeant, Determination of lonization Constants, chapter 2: Determination of ionization constants by potentiometric titration using a glass electrode, Chapman and Hall, London (1984).

Prinzip:

**Für die Ionisierung einer Base in Wasser**

läßt sich die Dissoziationskonstante $K_b$ angeben:

$$B + H_2O \rightleftharpoons BH^+ + OH^-$$

$$K_b = \frac{{}^{a}BH^+ \cdot {}^{a}OH^-}{{}^{a}B \cdot {}^{a}H2O}$$

Hierbei repräsentieren $^{a}$ die Aktivitäten der einzelnen Spezies in mol/l.

In verdünnten Lösungen entspricht die Aktivität einer Spezies näherungsweise ihrer Konzentration c in mol/l. Außerdem kann $^{a}H2O$ als konstant angesehen werden. Somit ergibt sich:

$$K_b = \frac{{}^{c}BH^+ \cdot {}^{c}OH^-}{{}^{c}B}$$

Die Dissoziationskonstante wird häufig auch in Form eines negativen Logarithmus angegeben.

$$pK_b = pOH + \log \frac{{}^{c}B}{{}^{c}BH^+}$$

Bei Verwenden der Ionisationskonstante der konjugierten

$$BH^+ \rightleftharpoons H^+ + B$$

Säure ist zu formulieren:

unter Gebrauch der Formeln

$$pOH + pH = 14$$

$$pK_b + pK_a = 14$$

kann die Ionisationkonstante $pK_a$ unter Verwendung folgender Gleichung bestimmt werden:

$$pK_a = pH + \log \frac{^{c}BH^{+}}{^{c}B}$$

Der $pK_a$-Wert läßt sich u.a. titrimetrisch bestimmen.
Hierzu löst man die Prüfsubstanz (z.B. Base B) in Wasser. Die Konzentration sollte hierbei nicht mehr als 0,01 mol/l betragen.
Wenn die Substanz nur schlecht löslich ist, werden ggf. geringere Anteile eines wassermischbaren Lösemittels (z.B. Isopropanol) hinzugefügt. Die Prüflösung wird mit einer Säure-Maßlösung titriert.
Die Temperatur sollte hierbei zwischen 20 °C und 25 °C liegen und auf ± 1 °C eingehalten werden.
Die Auswertung erfolgt nach der folgenden Formel:

$$pK_a = pH + \log \frac{^{c}MH + {^{c}OH^{-}} - {^{c}H^{+}}}{^{c}S - {^{c}MH} - {^{c}OH^{-}} + {^{c}H^{+}}}$$

Hierbei bedeuten:

$pK_a$ = neg. Logarithmus der Dissoziationskonstante
pH = neg. Logarithmus der $H^+$-Ionen-Aktivität (näherungsweise $H^+$- Ionen-Konzentration), wobei gilt:

$$pH = -\log {^{c}H^{+}}$$

$^{c}H^{+}$ = Konzentration der $H^+$-Ionen in mol/l (wird aus gemessenem pH-Wert berechnet. Solange der pH-Wert über 7 liegt, kann $^{c}H^{+}$ bei der Ergebnisberechnung vernachlässigt werden.)
$^{C}OH^{-}$ = Konzentration der $OH^-$-Ionen in mol/l (wird aus gemessenem pH-Wert berechnet: pH + pOH = 14. Solange der pH-Wert unter 7 liegt, kann $^{c}OH^{-}$ bei der Ergebnisberechnung vernachlässigt werden.)
$^{c}S$ = Durch Einwaage vorgegebene Brutto-Konzentration der Prüfsubstanz in der Prüflösung in mol/l (Substanzkonzentration)
$^{c}MH$ = Konzentration des Titriermittels MH in mol/l, wobei M in der Regel ein Halogen ist (z.B. Cl, Br)

$$^{c}MH = V \cdot c \cdot t \cdot \frac{1000}{Vp + V \cdot 1000}$$

V = Verbrauch an Titriermittel in l
c = Soll-Konzentration des Titriermittels in mol/l
t = Titer
Vp = Probenvolumen in ml beim Ansetzen von $^{c}S$

$$\text{Der Ausdruck } \frac{1000}{Vp + V \cdot 1000} \text{ kann näherungsweise} = 20$$

gesetzt werden, wenn der Titriermittelverbrauch nicht mehr als 5 ml beträgt und Vp ca. 47 - 48 ml (z.B. 47,5 ml) beträgt.

2.1 **Geräte**

2.1.1 Waage: Mettler AT 261 Wag 17

2.1.2 Titrator: Metrohm DMS Titrino 716 mit 10 ml Wechseleinheit W 20

2.1.3 Kombinierte Glaselektrode: Metrohm 6.0203.100 EG 10

2.2 **Reagenzien**

2.2.1 Maßlösung: Salzsäure, Stoffmengenkonzentration c(HCl) = 0,1 mol/l, Hersteller: Bernd Kraft, Artikel-Nr. 1044, Titer t = 1,0016, Titer-Nr. 98/08/32

2.2.2 Wasser, deionisiert, BASF (ELGA-Maxima-Reinstwasseranlage)

2.3 **Vorgehen**

Ca. 0,09 g Prüfsubstanz werden exakt eingewogen (vgl. Abs. 2) und in 47,5 ml Wasser (2.2.2) unter magnetischem Rühren gelöst.Die erhaltene Lösung mit einer Konzentration $^{c}S$ von ca. 0,01 M wird dann schrittweise mit jeweils gleichen Volumina an Salzsäure (2.2.1) versetzt. Der erhaltene pH-Wert wird ermittelt und unter Verwendung der in Abschnitt 2 genannten Formel tabellarisch ausgewertet.
Meßtemperatur = 23 °C

**Patentansprüche**

1. Beschichtungsmittel enthaltend

   (a) mindestens ein Bindemittel (A) mit reaktiven Gruppen,
   (b) mindestens ein Vernetzungsmittel (B), das mit den reaktiven Gruppen des Bindemittels (A) unter Vernetzung reagieren kann, und
   (c) mindestens einen Katalysator (C) für die Vernetzung von Silangruppen, wobei ein oder mehrere Bestandteile (A) und/oder (B) und/oder mindestens ein weiterer Bestandteil des Beschichtungsmittels hydrolysierbare Silangruppen enthalten, **dadurch gekennzeichnet, dass** der Katalysator (C) eine mit einem bicyclischen Amin mit einem $pK_b$-Wert ≥ 3 und einem Siedepunkt > 100°C blockierte Phosphorsäureverbindung, insbesondere Phosphorsäure oder Phosphonsäure, ist und dass es als Bindemittel mindestens eine hydroxylgruppenhaltige Verbindung (A) und als Vernetzungsmittel mindestens eine Verbindung (B) mit freien und/oder blockierten Isocyanatgruppen enthält.

2. Beschichtungsmittel nach Anspruch 1, **dadurch gekennzeichnet**, der Katalysator (C) ausgewählt ist aus der Gruppe der substituierten Phosphorsäuremonoester und Phosphorsäurediester, vorzugsweise aus der Gruppe, bestehend aus acyclischen Phosphorsäurediestern und cyclischen Phosphorsäurediestern.

3. Beschichtungsmittel nach Anspruch 2, **dadurch gekennzeichnet, dass** der Katalysator (C) ausgewählt ist aus der Gruppe aminblockierter Phosphorsäureethylhexylteilester und aminblockierter Phosphorsäurephenylteilester, insbesondere aminblockierter Phosphorsäurebis(ethylhexyl)ester.

4. Beschichtungsmittel nach Anspruch 1 bis 3, **dadurch gekennzeichnet, dass** das bicyclische Amin Diazabicyclooctan ist.

5. Beschichtungsmittel nach einem der Ansprüche 1 bis 4, **dadurch gekennzeichnet, dass** ein oder mehrere Bestandteile des Beschichtungsmittels zumindestens teilweise eine oder mehrere, gleiche oder verschiedene Struktureinheiten der Formel (I) aufweisen

$$-X\text{-}Si\text{-}R''_xG_{3-x} \qquad (I)$$

mit

G = identische oder unterschiedliche hydrolysierbare Gruppen, insbesondere G = Alkoxygruppe (O R'),
X = organischer Rest, insbesondere linearer und/oder verzweigter Alkylen- oder Cycloalkylenrest mit 1 bis 20 Kohlenstoffatomen, ganz besonders bevorzugt X = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
x = 0 bis 2, bevorzugt 0 bis 1, besonders bevorzugt x = 0.

6. Beschichtungsmittel nach einem der Ansprüche 1 bis 5, **dadurch gekennzeichnet, dass** ein oder mehrere Bestandteile des Beschichtungsmittels zwischen 2,5 und 97,5 mol-%, bezogen auf die Gesamtheit der Struktureinheiten (II) und (III), mindestens einer Struktureinheit der Formel (II)

$$-N(X\text{-}SiR''_x(OR')_{3-x})_n(X'\text{-}SiR''_y(OR')_{3-y})_m \qquad (II)$$

wobei

R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/- oder Methyl
X,X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
n = 0 bis 2, m = 0 bis 2, m+n = 2 , sowie
x,y = 0 bis 2,

und
zwischen 2,5 und 97,5 mol-%, bezogen auf die Gesamtheit der Struktureinheiten (II) und (III), mindestens einer Struktureinheit der Formel (III)

$$-Z\text{-}(X\text{-}SiR''_x(OR')_{3-x}) \qquad (III),$$

wobei

Z = -NH-, -NR-,-O-, mit
R = Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
x = 0 bis 2, und
X, R', R" die bei Formel (II) angegebene Bedeutung haben,

aufweisen.

7. Beschichtungsmittel nach Anspruch 6, **dadurch gekennzeichnet, dass** ein oder mehrere Bestandteile des Beschichtungsmittels zwischen 5 und 95 mol-%, insbesondere zwischen 10 und 90 mol-%, besonders bevorzugt zwischen 20 und 80 mol-%, und ganz besonders zwischen 30 und 70 mol-%, jeweils bezogen auf die Gesamtheit der Struktureinheiten (II) und (III), mindestens einer Struktureinheit der Formel (II) und zwischen 5 und 95 mol-%, insbesondere zwischen 10 und 90 mol-%, besonders bevorzugt zwischen 20 und 80 mol-%, und ganz besonders

zwischen 30 und 70 mol-%, jeweils bezogen auf die Gesamtheit der Struktureinheiten (II) und (III), mindestens einer Struktureinheit der Formel (III), aufweisen.

8. Beschichtungsmittel nach Anspruch 6 oder 7, **dadurch gekennzeichnet, dass** die Strukturelemente (II) und (III) in Anteilen von 2,5 bis 97,5 mol-%, bevorzugt von 5 bis 95 mol-%, besonders bevorzugt zwischen 10 und 90 mol-%, jeweils bezogen auf die Summe der für die Vernetzung im Beschichtungsmittel maßgeblichen funktionellen Gruppen, gebildet aus den Anteilen der Hydroxyl- und Isocyanatgruppen sowie den Anteilen der Strukturelemente (II) und (III), vorhanden sind.

9. Beschichtungsmittel nach einem der Ansprüche 5 bis 8, **dadurch gekennzeichnet, dass** das Polyisocyanat (B) die Struktureinheiten (I) bzw. (II) bzw. (III) aufweist.

10. Beschichtungsmittel nach Anspruch 9, **dadurch gekennzeichnet, dass** im Polyisocyanat (B)
zwischen 2,5 und 90 mol-%, der Isocyanatgruppen im
Polyisocyanatgrundkörper zu Struktureinheiten (II) und
zwischen 2,5 und 90 mol-%, der Isocyanatgruppen im
Polyisocyanatgrundkörper zu Struktureinheiten (III)
umgesetzt sind und der Gesamtanteil der zu den Struktureinheiten (II) und (III) umgesetzten Isocyanatgruppen im Polyisocyanatgrundkörper zwischen 5 und 95 mol-% liegt.

11. Beschichtungsmittel nach Anspruch 9 oder 10, **dadurch gekennzeichnet, dass** der Polyisocyanatgrundkörper ausgewählt ist aus der Gruppe 1,6-Hexamethylendiisocyanat, Isophorondiisocyanat, und 4,4'-Methylendicyclohexyldiisocyanat, der Biuret-Dimeren der vorgenannten Polyisocyanate und/oder der Isocyanurat-Trimeren der vorgenannten Polyisocyanate.

12. Beschichtungsmittel nach einem der Ansprüche 1 bis 11, **dadurch gekennzeichnet, dass** das Polyol (A) mindestens ein Poly(meth)acrylatpolyol enthält.

13. Beschichtungsmittel nach Anspruch 1 bis 12, **dadurch gekennzeichnet, dass** der Katalysator (C) in einer Menge von 0,1 bis 10 Gew.-%, bevorzugt 0,1 bis 3Gew.-% bezogen auf den Feststoffgehalt des Beschichtungsmittels in diesem enthalten ist.

14. Mehrstufiges Beschichtungsverfahren, **dadurch gekennzeichnet, dass** auf ein gegebenenfalls vorbeschichtetes Substrat eine pigmentierte Basislackschicht und danach eine Schicht aus dem Beschichtungsmittel nach einem der Ansprüche 1 bis 13 aufgetragen wird.

15. Mehrstufiges Beschichtungsverfahren nach Anspruch 14, **dadurch gekennzeichnet, dass** nach den Auftrag der pigmentierten Basislackschicht der aufgebrachte Basislack zunächst bei Temperaturen von Raumtemperatur bis 80°C getrocknet wird und nach dem Auftrag des Beschichtungsmittels nach einem der Ansprüche 1 bis 14 bei Temperaturen von 30 bis 200°C während einer Zeit von 1 min bis zu 10 h gehärtet wird.

16. Verwendung der Beschichtungsmittel nach einem der Ansprüche 1 bis 13 als Klarlack bzw. Anwendung des Verfahrens nach Anspruch 14 oder 15 für die Automobilserienlackierung und die Automobilreparaturlackierung.

## Claims

1. A coating composition comprising

(a) at least one binder (A) having reactive groups,
(b) at least one crosslinking agent (B) which is able to react, with crosslinking with the reactive groups of the binder (A), and
(c) at least one catalyst (C) for the crosslinking of silane groups, one or more constituents (A) and/or (B) and/or at least one further constituent of the coating composition containing hydrolyzable silane groups, wherein the catalyst (C) is a phosphoric acid compound, more particularly phosphoric acid or phosphonic acid, which is blocked with a bicyclic amine having a $pK_b \geq 3$ and a boiling point > 100°C and wherein the composition comprises as binder at least one hydroxyl-containing compound (A) and as crosslinking agent at least one compound (B) having free and/or blocked isocyanate groups.

2. The coating composition as claimed in claim 1, wherein the catalyst (C) is selected from the group of substituted phosphoric monoesters and phosphoric diesters, preferably from the group consisting of acyclic phosphoric diesters and cyclic phosphoric diesters.

3. The coating composition as claimed in claim 2, wherein the catalyst (C) is selected from the group of amine-blocked phosphoric acid ethylhexyl partial esters and amine-blocked phosphoric acid phenyl partial esters, more particularly amine-blocked phosphoric acid bis(ethylhexyl) esters.

4. The coating composition as claimed in claim 1 to 3, wherein the bicyclic amine is diazabicyclooctane.

5. The coating composition as claimed in any one of claims 1 to 4, wherein one or more constituents of the coating composition at least partly contain one or more, identical or different structural units of the formula (I)

$$-X\text{-}Si\text{-}R''_xG_{3-X} \qquad (I)$$

with

G = identical or different hydrolyzable groups, more particularly G = alkoxy group (O R'),
X = organic radical, more particularly linear and/or branched alkylene or cycloalkylene radical having 1 to 20 carbon atoms, very preferably X = alkylene radical having 1 to 4 carbon atoms,
R" = alkyl, cycloalkyl, aryl, or aralkyl, it being possible for the carbon chain to be interrupted by nonadjacent oxygen, sulfur or NRa groups, with Ra = alkyl, cycloalkyl, aryl or aralkyl, preferably R" = alkyl radical, more particularly having 1 to 6 C atoms,
x = 0 to 2, preferably 0 to 1, more preferably x = 0.

6. The coating composition as claimed in any one of claims 1 to 5, wherein one of more constituents of the coating composition contain
between 2.5 and 97.5 mol%, based on the entirety of structural units (II) and (III), of at least one structural unit of the formula (II)

$$-N(X\text{-}SiR''_x(OR')_{3-x})_n(X'\text{-}SiR''_y(OR')_{3-y})_m \qquad (II)$$

where

R' = hydrogen, alkyl or cycloalkyl, it being possible for the carbon chain to be interrupted by nonadjacent oxygen, sulfur or NRa groups, with Ra = alkyl, cycloalkyl, aryl or aralkyl, preferably R' = ethyl and/or methyl,
X, X' = linear and/or branched alkylene or cycloalkylene radical having 1 to 20 carbon atoms, preferably X, X' = alkylene radical having 1 to 4 carbon atoms,
R" = alkyl, cycloalkyl, aryl or aralkyl, it being possible for the carbon chain to be interrupted by nonadjacent oxygen, sulfur or NRa groups, with Ra = alkyl, cycloalkyl, aryl or aralkyl, preferably R" = alkyl radical, more particularly having 1 to 6 C atoms,
n = 0 to 2, m = 0 to 2, m+n = 2 , and
x,y = 0 to 2,

and
between 2.5 and 97.5 mol%, based on the entirety of structural units (II) and (III), of at least one structural unit of the formula (III)

$$-Z\text{-}(X\text{-}SiR''_x(OR')_{3-x}) \qquad (III),$$

where

Z = -NH-, -NR-, -O-, with
R = alkyl, cycloalkyl, aryl or aralkyl, it being possible for the carbon chain to be interrupted by nonadjacent oxygen, sulfur or NRa groups, with Ra = alkyl, cycloalkyl, aryl or aralkyl,
x = 0 to 2, and
X, R', R" being as defined for formula (II).

**7.** The coating composition as claimed in claim 6, wherein one or more constituents of the coating composition contain between 5 and 95 mol%, more particularly between 10 and 90 mol%, with particular preference between 20 and 80 mol%, and very particularly between 30 and 70 mol%, based in each case on the entirety of structural units (II) and (III), at least one structural unit of the formula (II) and between 5 and 95 mol%, more particularly between 10 and 90 mol%, with particular preference between 20 and 80 mol%, and very particularly between 30 and 70 mol%, based in each case on the entirety of structural units (II) and (III), of at least one structural unit of the formula (III).

**8.** The coating composition as claimed in claim 6 or 7, wherein the structural elements (II) and (III) are present in fractions of 2.5 to 97.5 mol%, preferably of 5 to 95 mol%, more preferably between 10 and 90 mol%, based in each case on the sum of the functional groups critical for crosslinking in the coating composition, formed from the fractions of the hydroxyl and isocyanate groups and from the fractions of the structural elements (II) and (III).

**9.** The coating composition as claimed in any one of claims 5 to 8, wherein the polyisocyanate (B) comprises the structural units (I) and/or (II) and/or (III).

**10.** The coating composition as claimed in claim 9, wherein, in the polyisocyanate (B),
between 2.5 and 90 mol% of the isocyanate groups in the core polyisocyanate structure have undergone reaction to structural units (II) and
between 2.5 and 90 mol% of the isocyanate groups in the core polyisocyanate structure have undergone reaction to structural units (III)
and the total fraction of the isocyanate groups in the core polyisocyanate structure that have undergone reaction to structural units (II) and (III) is between 5 and 95 mol%.

**11.** The coating composition as claimed in claim 9 or 10, wherein the core polyisocyanate structure is selected from the group of 1,6-hexamethylene diisocyanate, isophorone diisocyanate, and 4,4'-methylenedicyclohexyl diisocyanate, the biuret dimers of the aforementioned polyisocyanates and/or the isocyanurate trimers of the aforementioned polyisocyanates.

**12.** The coating composition as claimed in any one of claims 1 to 11, wherein the polyol (A) comprises at least one poly(meth)acrylate polyol.

**13.** The coating composition as claimed in claim 1 to 12, wherein the catalyst (C) is present in the coating composition in an amount of 0.1% to 10% by weight, preferably 0.1% to 3% by weight, based on the solids content of said composition.

**14.** A multistage coating method which comprises applying a pigmented basecoat film to an uncoated or precoated substrate and thereafter applying a film of the coating composition as claimed in any one of claims 1 to 13.

**15.** The multistage coating method as claimed in claim 14, wherein, following the application of the pigmented basecoat film, the applied basecoat material is first dried at temperatures from room temperature to 80°C and, following the application of the coating composition as claimed in any one of claims 1 to 14, the system is cured at temperatures from 30 to 200°C for a time of 1 min up to 10 h.

**16.** The use of the coating composition as claimed in any one of claims 1 to 13 as a clearcoat material or application of the method as claimed in claim 14 or 15 for automotive OEM finishing or automotive refinish.

## Revendications

**1.** Agent de revêtement contenant

(a) au moins un liant (A) présentant des groupes réactifs,
(b) au moins un liant (B), qui peut réagir avec réticulation avec les groupes réactifs du liant (A), et
c) au moins un catalyseur (C) pour la réticulation de groupes silane, un ou plusieurs constituants (A) et/ou (B) et/ou au moins un autre constituant de l'agent de revêtement contenant des groupes silane hydrolysables, **caractérisé en ce que** le catalyseur (C) est un composé de l'acide phosphorique bloqué par une amine bicyclique ayant un pub ≥ 3 et un point d'ébullition > 100°C, en particulier l'acide phosphorique ou l'acide phosphonique, et qu'il contient en tant que liant au moins un composé hydroxylé (A) et en tant qu'agent de réticulation au moins

un composé (B) comportant des groupes isocyanate libres et/ou bloqués.

2. Agent de revêtement selon la revendication 1, **caractérisé en ce que** le catalyseur (C) est choisi dans le groupe formé par les monoesters et les diesters substitués de l'acide phosphorique, de préférence dans le groupe constitué par les diesters acycliques et cycliques de l'acide phosphorique.

3. Agent de revêtement selon la revendication 2, **caractérisé en ce que** le catalyseur (C) est choisi dans le groupe des esters éthylhexyliques partiels de l'acide phosphorique bloqués par amine et des esters phényliques partiels de l'acide phosphorique bloqués par amine, en particulier des esters bis(éthylhexyliques) de l'acide phosphorique bloqués par amine.

4. Agent de revêtement selon la revendication 1 à 3, **caractérisé en ce que** l'amine bicyclique est le diazabicyclooctane.

5. Agent de revêtement selon l'une quelconque des revendications 1 à 4, **caractérisé en ce que** un ou plusieurs constituants de l'agent de revêtement présente(nt) au moins en partie une ou plusieurs unités de structure identiques ou différentes de formule (I)

$$-X\text{-}Si\text{-}R''_xG_{3-x} \qquad (I)$$

où

G = des groupes hydrolysables identiques ou différents, en particulier G = un groupe alcoxy (OR'),
X = un radical organique, en particulier un radical alkylène linéaire et/ou ramifié ou cycloalkylène, comprenant 1 à 20 atomes de carbone, de manière tout particulièrement préférée X = un radical alkylène comprenant 1 à 4 atomes de carbone,
R" = alkyle, cycloalkyle, aryle ou aralkyle, la chaîne carbonée pouvant être interrompue par des groupes oxygène, soufre ou NRa non adjacents, avec Ra = alkyle, cycloalkyle, aryle ou aralkyle, de préférence R" = un radical alkyle, comprenant en particulier 1 à 6 atomes de carbone,
x = 0 à 2, de préférence 0 à 1, de manière particulièrement préférée x = 0.

6. Agent de revêtement selon l'une quelconque des revendications 1 à 5, **caractérisé en ce que** un ou plusieurs constituants de l'agent de revêtement présente(nt)
entre 2,5 et 97,5% en mole, par rapport à la totalité des unités de structure (II) et (III),
d'au moins une unité de structure de formule (II)

$$-N(X\text{-}SiR''_x(OR')_{3-x})_n(X'\text{-}SiR''_y(OR')_{3-y})_m \qquad (II)$$

où

R' = hydrogène, alkyle ou cycloalkyle, la chaîne carbonée pouvant être interrompue par des groupes oxygène, soufre ou NRa non adjacents, avec Ra = alkyle, cycloalkyle, aryle ou aralkyle, de préférence R' = éthyle et/ou méthyle,
X, X' = un radical alkylène linéaire et/ou ramifié ou cycloalkylène, comprenant 1 à 20 atomes de carbone, de préférence X, X' = un radical alkylène comprenant 1 à 4 atomes de carbone,
R" = alkyle, cycloalkyle, aryle ou aralkyle, la chaîne carbonée pouvant être interrompue par des groupes oxygène, soufre ou NRa non adjacents, avec Ra = alkyle, cycloalkyle, aryle ou aralkyle, de préférence R" = un radical alkyle, comprenant en particulier 1 à 6 atomes de carbone,
n = 0 à 2, m = 0 à 2, m+n = 2, et
x, y = 0 à 2,

et
entre 2,5 et 97,5% en mole, par rapport à la totalité des unités de structure (II) et (III), d'au moins une unité de structure de formule (III)

$$-Z\text{-}(X\text{-}SiR''_x(OR')_{3-x}) \qquad (III),$$

où

Z =-NH-, -NR-, -O-, avec
R = alkyle, cycloalkyle, aryle ou aralkyle, la chaîne carbonée pouvant être interrompue par des groupes oxygène, soufre ou NRa non adjacents, avec Ra = alkyle, cycloalkyle, aryle ou aralkyle,
x = 0 à 2, et
X, R', R" ont la signification indiquée pour la formule (II).

7. Agent de revêtement selon la revendication 6, **caractérisé en ce que** un ou plusieurs constituants de l'agent de revêtement présente(nt) entre 5 et 95% en mole, en particulier entre 10 et 90% en mole, de manière particulièrement préférée entre 20 et 80% en mole et de manière tout particulièrement préférée entre 30 et 70% en mole, à chaque fois par rapport à la totalité des unités de structure (II) et (III), d'au moins une unité de structure de formule (II) et entre 5 et 95% en mole, en particulier entre 10 et 90% en mole, de manière particulièrement préférée entre 20 et 80% en mole et de manière tout particulièrement préférée entre 30 et 70% en mole, à chaque fois par rapport à la totalité des unités de structure (II) et (III), d'au moins une unité de structure de formule (III).

8. Agent de revêtement selon la revendication 6 ou 7, **caractérisé en ce que** les éléments de structure (II) et (III) sont présents en des proportions de 2,5 à 97,5% en mole, de préférence de 5 à 95% en mole, de manière particulièrement préférée entre 10 et 90% en poids, à chaque fois par rapport à la somme des groupes fonctionnels déterminants pour la réticulation dans l'agent de revêtement, formée par les proportions de groupes hydroxyle et isocyanate ainsi que par les proportions des éléments de structure (II) et (III).

9. Agent de revêtement selon l'une quelconque des revendications 5 à 8, **caractérisé en ce que** le polyisocyanate (B) présente les unités de structure (I) ou (II) ou (III), respectivement.

10. Agent de revêtement selon la revendication 9, **caractérisé en ce que** dans le polyisocyanate (B) entre 2,5 et 90% en mole des groupes isocyanate dans le corps de base polyisocyanate sont transformés en unités de structure (II) et entre 2,5 et 90% en mole des groupes isocyanate dans le corps de base polyisocyanate sont transformés en unités de structure (III)
et la proportion totale des groupes isocyanate transformés en unités de structure (II) et (III) dans le corps de base polyisocyanate se situe entre 5 et 95% en mole.

11. Agent de revêtement selon la revendication 9 ou 10, **caractérisé en ce que** le corps de base polyisocyanate est choisi dans le groupe formé par le 1,6-hexaméthylènediisocyanate, l'isophoronediisocyanate et le 4,4'-méthylènedicyclohexyldiisocyanate, les dimères de biuret des polyisocyanates susmentionnés et/ou les trimères d'isocyanurate des polyisocyanates susmentionnés.

12. Agent de revêtement selon l'une quelconque des revendications 1 à 11, **caractérisé en ce que** le polyol (A) contient au moins un poly(méth)acrylate-polyol.

13. Agent de revêtement selon les revendications 1 à 12, **caractérisé en ce que** le catalyseur (C) y est contenu en une quantité de 0,1 à 10 % en poids, de préférence de 0,1 à 3 % en poids, par rapport à l'extrait sec de l'agent de revêtement.

14. Procédé de revêtement à plusieurs étapes, **caractérisé en ce qu'**on applique, sur un substrat le cas échéant revêtu au préalable, une laque de base pigmentée, puis une couche de l'agent de revêtement selon l'une quelconque des revendications 1 à 13.

15. Procédé de revêtement en plusieurs étapes selon la revendication 14, **caractérisé en ce qu'**après l'application de la couche de laque de base pigmentée, on sèche d'abord la couche de laque de base appliquée à des températures allant de la température ambiante à 80°C, et après l'application de l'agent de revêtement selon l'une quelconque des revendications 1 à 14, on durcit à des températures de 30 à 200°C pendant un laps de temps de 1 min à 10 h.

16. Utilisation de l'agent de revêtement selon l'une quelconque des revendications 1 à 13 comme laque claire ou, respectivement, utilisation du procédé selon la revendication 14 ou 15 pour le laquage en série et le laquage de réparation de voitures.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0198393 A
- EP 0994117 A
- US 20060217472 A
- WO 2006042585 A
- EP 1273640 A
- EP 0554684 A
- DE 102005045228 A
- WO 0703857 A
- WO 0109260 A
- US 4598131 A
- EP 0626888 A
- EP 0692007 A
- US 4499150 A
- US 4499151 A
- EP 0571073 A
- US 4710542 A
- EP 0245700 B
- WO 9422968 A
- EP 0276501 A
- EP 0249201 A
- WO 9712945 A
- EP 0008127 A


### In der Beschreibung aufgeführte Nicht-Patentliteratur


- **B. SINGH ; MITARBEITER.** Carbamylmethylated Melamines, Novel Crosslinkers for the Coatings Industry. *Advanced Organic Coatings Science and Technology Series,* 1991, vol. 13, 193-207
- Lacke und Druckfarben. Römpp Lexikon. Georg Thieme Verlag, 1998, 250-252
- Dissoziation Constants in Water. *OECD GUIDELINE FOR TESTING OF CHEMICALS,* 1981, 112
- Determination of ionization constants by potentiometric titration using a glass electrode. **A. ALBERT ; E.P. SERJEANT.** Determination of Ionization Constants. Chapman and Hall, 1984